# EUROPÄISCHE PATENTANMELDUNG

(11) **EP 2 618 073 A1**
(43) Veröffentlichungstag der Anmeldung: **24.07.2013**
(21) Anmeldenummer: 12000296.9
(22) Anmeldetag: 19.01.2012
(51) Int. Cl.: F24J 2/52

(54) **Befestigungssystem zur Befestigung wenigstens eines Solarmoduls einer Solarmodulanordnung sowie entsprechende Solarmodulanordnung**

(71) Anmelder: Roto Frank AG, 70771 Leinfelden-Echterdingen (DE)
(72) Erfinder: Kloepfer, Hannes, 97980 Bad Mergentheim (DE)
(74) Vertreter: Grosse, Rainer

(57) **Zusammenfassung**

Die Erfindung betrifft ein Befestigungssystem (7) zur Befestigung wenigstens eines an oder in einer Montagefläche (4) anzuordnenden Solarmoduls (2,3) einer Solarmodulanordnung (1), mit mindestens einem an der Montagefläche (4) befestigbaren Befestigungselement (8,9) und mindestens einem an dem Solarmodul (2,3) befestigbaren Halteelement (10). Dabei ist vorgesehen, dass das Halteelement (10) mindestens einen Einsteckvorsprung (11) und das Befestigungselement (8,9) mindestens eine Einsteckaufnahme (12) zur Steckaufnahme des Einsteckvorsprungs (11) aufweist, wobei die Einsteckaufnahme (12) eine zwischen einer Aufnahmeunterseite (58) und einer Aufnahmeoberseite (59) bestehende Höhenabmessung (H) aufweist, die größer ist als eine zwischen einer Vorsprungsunterseite (60) und einer Vorsprungsoberseite (61) bestehende Dickenabmessung (h) des Einsteckvorsprungs (11), wobei zur Bildung einer bei einem Anheben des Einsteckvorsprungs (11) wirkenden Herausziehsperre (62) die Einsteckaufnahme (12) im Bereich ihrer Aufnahmeoberseite (59) eine Zahnungsaufnahme oder Zahnung (53) und der Einsteckvorsprung (11) im Bereich seiner Vorsprungsoberseite (61) eine Zahnung oder Zahnungsaufnahme (35) aufweist, und das Halteelement (10) zusammen mit dem Solarmodul (2,3), insbesondere durch Windkrafteinfluss, zwischen einer Ruheposition, in d,ie es durch Schwerkrafteinfluss gedrängt ist, und einer Anschlagposition, in der es an einem von dem Befestigungselement (8) gebildeten Endanschlag anliegt, verlagerbar ist. Die Erfindung betrifft weiterhin eine Solarmodulanordnung (1).

## Beschreibung

Die Erfindung betrifft ein Befestigungssystem zur Befestigung wenigstens eines an oder in einer Montagefläche anzuordnenden Solarmoduls einer Solarmodulanordnung, mit mindestens einem an oder in der Montagefläche befestigbaren Befestigungselement und mindestens einem an dem Solarmodul befestigbaren Halteelement. Die Erfindung betrifft weiterhin eine Solarmodulanordnung.

Ein derartiges Befestigungssystem ist bekannt, ebenso die Solarmodulanordnung mit dem wenigstens einen Solarmodul. Das Solarmodul wird mittels des Befestigungssystems an oder in der Montagefläche befestigt. Die Montagefläche ist insbesondere ein Dach, eine Dachöffnung beziehungsweise Ausnehmung des Dachs, eine Fassade oder dergleichen. Bei Anordnung an dem Dach liegt beispielsweise eine Aufdachanordnung des Solarmoduls beziehungsweise der Solarmodulanordnung vor. Bei dieser befindet sich das Solarmodul oberhalb von Eindeckelementen einer Dacheindeckung des Dachs, insbesondere oberhalb von Dachpfannen beziehungsweise Dachziegeln. Soll das Solarmodul in der Dachöffnung angeordnet werden, so ist insbesondere eine Indachanordnung vorgesehen. Bei dieser liegt das Solarmodul im Wesentlichen innerhalb einer Dacheindeckungsfläche und ersetzt insoweit die ansonsten vorgesehenen Eindeckelemente. An der von dem Solarmodul überdeckten Fläche der Dachöffnung ist entsprechend keine Dacheindeckung in Form des wenigstens einen Eindeckelements erforderlich.

Das Befestigungssystem besteht aus mehreren Elementen, zumindest jedoch aus dem wenigstens einen Befestigungselement und aus dem wenigstens einen Halteelement. Das Befestigungselement ist an oder in der Montagefläche beziehungsweise an einem Element der Montagefläche oder an einem die Montagefläche bildenden oder durchgreifenden Element befestigbar. Das Halteelement ist dagegen dem Solarmodul zugeordnet und an diesem befestigbar. Beispielsweise wird zunächst das Befestigungselement an oder in der Montagefläche und das Halteelement an dem Solarmodul befestigt. Anschließend wird das Solarmodul an oder in der Montagefläche angeordnet und mit Hilfe des Befestigungssystems befestigt. Bei bekannten Befestigungssystemen tritt jedoch der Nachteil auf, dass durch Windkrafteinfluss eine ausgeprägte Verlagerung zumindest von Bereichen des Solarmoduls in Bezug zu der Montagefläche bewirkt werden kann. Der Windkrafteinfluss ist insbesondere durch eine Windlast bedingt, welche als Flächenlast senkrecht zu einer Solarmoduloberfläche des Solarmoduls vorliegt. Die Windlast setzt sich aus Druckwirkung und Sogwirkung zusammen. Aufgrund der Verlagerung kann es zu einer starken Durchbiegung und schlussendlich zu einer Beschädigung des Solarmoduls kommen.

Der Erfindung liegt daher die Aufgabe zugrunde, ein Befestigungssystem bereitzustellen, welches zum einen kostengünstig und flexibel handhabbar ist und zum anderen einen schnellen und unkomplizierten Einbau und auch Ausbau des Solarmoduls ermöglicht, wobei das Solarmodul auch bei hoher Windlast, also starkem Windkrafteinfluss, sicher gehalten ist.

Diese Aufgabe wird erfindungsgemäß mit einem Befestigungssystem mit den Merkmalen des Anspruchs 1 gelöst. Dabei ist vorgesehen, dass das Halteelement mindestens einen Einsteckvorsprung und das Befestigungselement mindestens eine Einsteckaufnahme zur Steckaufnahme des Einsteckvorsprungs aufweist, wobei die Einsteckaufnahme eine zwischen einer Aufnahmeunterseite und einer Aufnahmeoberseite bestehende Höhenabmessung aufweist, die größer ist als eine zwischen einer Vorsprungsunterseite und einer Vorsprungsoberseite bestehende Dickenabmessung des Einsteckvorsprungs, wobei zur Bildung einer bei einem Anheben des Einsteckvorsprungs wirkenden Herausziehsperre die Einsteckaufnahme im Bereich ihrer Aufnahmeoberseite eine Zahnungsaufnahme oder Zahnung und der Einsteckvorsprung im Bereich seiner Vorsprungsoberseite eine Zahnung oder Zahnungsaufnahme aufweist, und das Halteelement zusammen mit dem Solarmodul, insbesondere durch Windkrafteinfluss, zwischen einer Ruheposition, in die es durch Schwerkrafteinfluss gedrängt ist, und einer Anschlagposition, in der es an einem von dem Befestigungselement gebildeten Endanschlag anliegt, verlagerbar ist. Die Ruheposition und die Anschlagposition sind in einer ersten Richtung voneinander beabstandet. Vorzugsweise legen sie die relative Position von Einsteckvorsprung und Einsteckaufnahme zueinander in von der ersten Richtung verschiedene Richtungen nicht fest.

Das Befestigen des Solarmoduls erfolgt durch Ineinandergreifen des Halteelements und des Befestigungselements, wobei der Einsteckvorsprung des Halteelements in der Einsteckaufnahme des Befestigungselements angeordnet wird. Das Einstecken des Einsteckvorsprungs in die Einsteckaufnahme wird bei einer Montage des Solarmoduls beziehungsweise der Solarmodulanordnung vorgenommen. Üblicherweise ist die Befestigung des Solarmoduls mittels des Befestigungssystems derart ausgestaltet, dass das Solarmodul nicht vollständig starr an oder in der Montagefläche gehalten ist, sondern insbesondere kleine Bewegungen, beispielsweise zum Ausgleich von thermischen Spannungen oder dergleichen, zulässt. Das bedeutet, dass das Solarmodul in verschiedenen Positionen vorliegen kann. Insbesondere sind das Solarmodul und entsprechend auch das Halteelement, welches an dem Solarmodul befestigt ist, zwischen der Ruheposition und der Anschlagposition verlagerbar. Die Ruheposition bezeichnet eine Position, in welche das Halteelement beziehungsweise das Solarmodul durch Schwerkrafteinfluss gedrängt ist. In der Ruheposition liegt das Halteelement beispielsweise auf einem Bereich eines weiteren Befestigungselements oder der Montagefläche, insbesondere einem Montageflächenelement, auf.

Bei einer Verlagerung des Halteelements zusammen mit dem Solarmodul kann es in die Anschlagposition geraten, in welcher es an dem Endanschlag anliegt. Der Endanschlag wird dabei von dem Befestigungselement ausgebildet. Die Verlagerung des Halteelements aus der Ruheposition in Richtung der Anschlagposition wird häufig durch Windkrafteinfluss bewirkt. Letztere entsteht, indem Luft mit einer bestimmten Geschwindigkeit unter das Solarmodul gerät oder dieses überströmt, also eine Windlast verursacht. Ab einer bestimmten Windgeschwindigkeit, welche insbesondere von dem Gewicht des Solarmoduls abhängt, ist die von dem Wind beziehungsweise der Luft auf das Solarmodul ausgeübte Windkraft ausreichend groß, um dieses aus der Ruheposition in Richtung der Anschlagposition zu verlagern. Ist die Anschlagposition erreicht, so wird eine weitere Verlagerung in der ersten Richtung durch das Zusammenwirken des Halteelements mit dem Endanschlag verhindert.

Das Solarmodul ist an einer ersten Seite, insbesondere Stirnseite, mittels des Halteelements und des Befestigungselements an oder in der Montagefläche befestigt. Zusätzlich ist vorzugsweise zumindest eine Befestigung an einer zweiten Seite, insbesondere Stirnseite, vorgesehen, welche beispielsweise bezüglich des Solarmoduls der ersten Seite gegenüberliegt. Während das Solarmodul auf der ersten Seite nun zumindest in der Ruhelage verschieblich gelagert ist, ist es auf der zweiten Seite insbesondere starr befestigt. Trotz der starren Befestigung auf der zweiten Seite kann es zu dem vorstehend beschriebenen Durchbiegen kommen, wobei bei ausreichend kleiner Durchbiegung lediglich eine elastische Verformung des Solarmoduls auftritt.

Die erste Richtung, in welche die Verlagerung des Halteelements erfolgt, steht zumindest näherungsweise senkrecht auf der Montagefläche beziehungsweise dem Solarmodul und wird daher nachfolgend auch als vertikale Richtung bezeichnet. Die von der ersten Richtung verschiedene zweite Richtung liegt dagegen üblicherweise parallel zu den genannten Elementen und steht senkrecht auf der ersten Richtung. Die zweite Richtung entspricht der Montagerichtung, in welche das Solarmodul bei seiner Montage verlagert wird, um den Einsteckvorsprung in die Einsteckaufnahme einzubringen beziehungsweise der Demontagerichtung. Durch eine Verlagerung in die zweite Richtung kann entsprechend der Einsteckvorsprung aus der Einsteckaufnahme entfernt und nachfolgend das Solarmodul von der Montagefläche abgehoben werden. Die zweite Richtung wird nachfolgend auch als Längsrichtung bezeichnet. Die laterale Richtung bezeichnet im Folgenden eine Richtung, die sowohl auf der ersten als auch der zweiten Richtung senkrecht steht.

Bei sehr großer Windlast kann es - wie beschrieben - vorkommen, dass der Windkrafteinfluss derart stark ist, dass eine Durchbiegung des Solarmoduls auftritt, insbesondere weil der Endanschlag die weitere Verlagerung des Halteelements verhindert. Durch diese Durchbiegung verkürzt sich die absolute (auf einer Gerade liegende) Strecke, welche zwischen der Befestigung des Solarmoduls auf der dem Halteelement abgewandten Seite des Solarmoduls und dem Halteelement vorliegt. Entsprechend wird der Einsteckvorsprung aus der Einsteckaufnahme herausverlagert. Dies lässt jedoch wiederum eine noch stärkere Durchbiegung zu. Aufgrund der Windlast kann so eine beträchtliche Durchbiegung des Solarmoduls auftreten, welche unter Umständen zu einer Beschädigung und damit zur Funktionsunfähigkeit oder zumindest einer Funktionsbeeinträchtigung des Solarmoduls führt.

Aus diesem Grund weist die erfindungsgemäße Einsteckaufnahme im Bereich ihrer Aufnahmeoberseite die Zahnungsaufnahme beziehungsweise Zahnung und der Einsteckvorsprung im Bereich seiner Vorsprungsoberseite eine korrespondierende Zahnung beziehungsweise Zahnungsaufnahme auf. Darunter ist zu verstehen, dass an dem Einsteckvorsprung die Zahnung vorgesehen ist, wenn die Einsteckaufnahme die Zahnungsaufnahme aufweist und umgekehrt über die Zahnungsaufnahme verfügt, wenn an der Einsteckaufnahme die Zahnung vorliegt. Dabei weist die Einsteckaufnahme die Höhenabmessung auf, die zwischen ihrer Aufnahmeunterseite und der Aufnahmeoberseite bestimmt wird. Entsprechend verfügt der Einsteckvorsprung über die Dickenabmessung, welche zwischen der Vorsprungsunterseite und der Vorsprungsoberseite vorliegt. Dabei ist zu beachten, dass die Zahnung beziehungsweise Zahnungsaufnahme der Einsteckaufnahme die Höhenabmessung mitbestimmt, diese also verringert. Analog dazu bestimmt die Zahnung beziehungsweise Zahnungsaufnahme des Einsteckvorsprungs auch dessen Dickenabmessung, vergrößert diese also.

Die Zahnung und die korrespondierende Zahnungsaufnahme bilden nun die Herausziehsperre, welche ausschließlich bei Anheben des Einsteckvorsprungs wirkt. Die Herausziehsperre liegt also insoweit als Anhebeherausziehsperre vor. Diese wird realisiert, indem die Höhenabmessung größer gewählt wird als die Dickenabmessung. Die Höhenabmessung und die Dickenabmessung sollen also derart vorliegen, dass die Zahnung beziehungsweise Zahnungsaufnahme des Einsteckvorsprungs in der Ruheposition nicht mit der Zahnungsaufnahme beziehungsweise Zahnung der Einsteckaufnahme zusammenwirkt. Das Zusammenwirken soll lediglich auftreten, wenn das Halteelement zusammen mit dem Solarmodul ausreichend weit in die erste Richtung verlagert ist und insbesondere in der Anschlagposition vorliegt.

In der Anschlagposition wird also zum einen eine weitere Verlagerung des Halteelements in die erste Richtung durch Anliegen an dem Endanschlag verhindert. Zum anderen wirken in der Anschlagposition Zahnung und Zahnungsaufnahme derart zusammen, dass eine Verlagerung des Haltevorsprungs in eine im Wesentlichen senkrecht auf der ersten Richtung stehende zweite Richtung, nämlich der Längsrichtung, aus der Einsteckaufnahme heraus verhindert ist. Entsprechend kann durch das erfindungsgemäße Befestigungssystem das Durchbiegen des Solarmoduls zumindest teilweise unterbunden werden. Beispielsweise tritt bei Verwendung von Einsteckvorsprung und Einsteckaufnahme ohne Zahnung beziehungsweise Zahnungsaufnahme eine Durchbiegung auf, bei welcher der Punkt des Solarmoduls, welcher durch die Durchbiegung am weitesten ausgelenkt ist, eine Auslenkung von etwa 15 cm aus seiner Ruhelage ohne Windlast erfährt. Durch das Zusammenwirken der Zahnung mit der Zahnungsaufnahme kann dieser Wert auf zum Beispiel etwa 5 cm oder weniger verringert werden.

Gleichzeitig wird durch die vorstehend erläuterte Wahl der Höhenabmessung und der Dickenabmessung eine einfache Montage des Solarmoduls erzielt. Insbesondere soll bei der Montage keine durch die Herausziehsperre bewirkte Rastbefestigung des Halteelements an dem Befestigungselement vorliegen. Der Einsteckvorsprung des Halteelements soll also bei der Montage in die Einsteckaufnahme des Befestigungselements eingeschoben werden können, ohne dass die Zahnung mit der Zahnungsaufnahme zusammenwirkt. Dies wird durch die vorstehend erläuterte Ausgestaltung von Einsteckvorsprung und Einsteckaufnahme erreicht. Entsprechend liegt in der Ruheposition keinerlei von Zahnung und Zahnungsaufnahme bewirkte Befestigung des Solarmoduls in die zweite Richtung beziehungsweise Längsrichtung vor. Bevorzugt ist also vorgesehen, dass das Halteelement ausschließlich in der Anschlagposition derart mit dem Befestigungselement zusammenwirkt, dass eine Verlagerung in die von der ersten Richtung verschiedene zweite Richtung zumindest teilweise, insbesondere vollständig, unterbunden ist. Beispielsweise ist die Höhenabmessung nur geringfügig größer als die Dickenabmessung. Vorzugsweise ist sie jedoch um mindestens 10% bis 100%, insbesondere mindestens 25% bis 75%, bevorzugt mindestens 50%, größer.

Ist an dem Einsteckvorsprung beziehungsweise der Einsteckaufnahme keine Zahnung beziehungsweise keine Zahnungsaufnahme vorgesehen, so kann sich das Solarmodul wie beschrieben durchbiegen, wobei das Halteelement in die zweite Richtung verlagert wird. Diese Verlagerung kann mit Hilfe der Zahnung und der mit dieser zusammenwirkenden Zahnungsaufnahme unterbunden werden. Wie vorstehend bereits erläutert ist dies jedoch während der Montage oder Demontage zumindest eines der Solarmodule nicht wünschenswert und der Einsteckvorsprung sollte ohne Zusammenwirken von Zahnung und Zahnungsaufnahme in die Einsteckaufnahme einbringbar sein. Entsprechend ist es also vorgesehen, dass die Zahnungsaufnahme oder Zahnung zumindest in der Ruheposition außer Eingriff mit der Zahnung oder Zahnungsaufnahme steht und nur in der Anschlagposition mit dieser zum wenigstens teilweisen Unterbinden der Verlagerung in die zweite Richtung, also dem Ausbilden der Herausziehsperre, zusammenwirkt.

Eine Weiterbildung der Erfindung sieht vor, dass die Zahnung wenigstens einen Zahn und die Zahnungsaufnahme wenigstens eine an den Zahn formangepasste Zahnaufnahme aufweist. Der Zahn liegt dabei als Vorsprung und die Zahnaufnahme als Vertiefung vor. Bei dem Zusammenwirken der Zahnung und der Zahnungsaufnahme greift entsprechend der Zahn in die Zahnaufnahme wenigstens bereichsweise ein, sodass eine Hintergriffsverbindung vorliegt. Grundsätzlich können der Zahn und die Zahnaufnahme eine beliebige Form aufweisen. Diese muss lediglich dazu geeignet sein, die Verlagerung des Halteelements in die zweite Richtung zu unterbinden, wenn die Zahnung mit der Zahnungsaufnahme zusammenwirkt. Beispielsweise liegt der Zahn als eine, insbesondere durch Umformen gebildete Zunge vor. Der Zahn ist insoweit integraler Bestandteil des Halteelements oder des Befestigungselements. Besonders vorteilhaft ist es, wenn der Zahn unmittelbar bei der Herstellung des Halteelements beziehungsweise des Befestigungselements mit ausgebildet wird. Beispielsweise wird das jeweilige Element in einem Umformschritt durch Umformen hergestellt. Entsprechend wird die Zunge, eventuell nach vorhergehendem Freischneiden, in demselben Umformschritt ebenfalls durch Umformen ausgebildet.

Eine Weiterbildung der Erfindung sieht vor, dass sich die Zahnung und/oder die Zahnungsaufnahme über die gesamte Breite oder lediglich einen ,Teil der Breite des Einsteckvorsprungs oder der Steckaufnahme erstrecken. Prinzipiell können Zahnung und Zahnungsaufnahme beliebig ausgeführt sein. Dabei können sie sich über die gesamte Breite des Einsteckvorsprungs beziehungsweise der Steckaufnahme erstrecken oder jeweils lediglich einen Teil der Breite dieser Elemente erfassen. Im letzteren Fall müssen die Zahnung und die Zahnungsaufnahme jedoch in lateraler Richtung derart zueinander angeordnet sein, dass nach einem Einbringen des Einsteckvorsprungs in die Einsteckaufnahme bei einer Verlagerung des Halteelements in die erste Richtung die Herausziehsperre wirkt, indem Zahnung und Zahnungsaufnahme ineinandergreifen.

Besonders bevorzugt ist es, wenn entweder die Zahnung oder die Zahnungsaufnahme an einem der Elemente, also entweder dem Einsteckvorsprung oder der Steckaufnahme, über die gesamte Breite und an dem jeweils anderen Element lediglich über einen Teil der Breite vorliegt. Unter einem Teil der Breite ist dabei beispielsweise ein Anteil von 5% bis 50%, insbesondere 10%, 15%, 20% oder 25%, der gesamten Breite der Steckaufnahme beziehungsweise des Einsteckvorsprungs zu verstehen. Wenn die Zahnung beziehungsweise die Zahnungsaufnahme sich lediglich über den Teil der Breite erstreckt, so wird stets ein zuverlässiges Eingreifen von Zahnung und Zahnungsaufnahme ineinander ermöglicht, auch bei einem Verkanten von Einsteckvorsprung und Steckaufnahme gegeneinander, also insbesondere auch bei einem nichtparallelen Verlauf von Zahnung und Zahnungsaufnahme zueinander.

Eine Weiterbildung der Erfindung sieht vor, dass die Zahnung und/oder die Zahnungsaufnahme mehrere Zähne oder Zahnaufnahmen aufweisen, die voneinander beabstandet, insbesondere quer zu einer Einschubrichtung des Einsteckvorsprungs beabstandet, angeordnet sind. Die Zahnung kann also über mehrere Zähne verfügen. Zusätzlich oder alternativ weist die Zahnungsaufnahme mehrere Zahnaufnahmen auf. Die Zähne beziehungsweise Zahnaufnahmen sollen jeweils voneinander beabstandet sein. Darunter kann zum einen verstanden werden, dass die Zähne beziehungsweise Zahnaufnahme gestaffelt parallel zueinander angeordnet sind. Bevorzugt sind sie jedoch quer zu der Einschubrichtung des Einsteckvorsprungs, also in lateraler Richtung, zueinander beabstandet, und grenzen entsprechend in dieser Richtung nicht unmittelbar aneinander.

Besonders bevorzugt ist es vorgesehen, dass lediglich die Einsteckaufnahme eine Zahnung beziehungsweise Zahnungsaufnahme mit mehreren quer zu der Einschubrichtung des Einsteckvorsprungs, also in lateraler Richtung, beabstandet angeordneten Zähnen beziehungsweise Zahnaufnahmen aufweist. Der Einsteckvorsprung kann zwar ebenfalls über eine Zahnung beziehungsweise Zahnungsaufnahme mit mehreren Zähnen beziehungsweise Zahnaufnahmen verfügen, diese erstrecken sich jedoch vorzugsweise jeweils über die gesamte Breite des Einsteckvorsprungs und sind parallel zueinander angeordnet, also lediglich in der Einschubrichtung des Einsteckvorsprungs voneinander beabstandet.

Eine Weiterbildung der Erfindung sieht vor, dass das Halteelement als Winkelelement mit zwei Schenkeln vorliegt, wobei einer der Schenkel an dem Solarmodul befestigbar ist und der andere den Einsteckvorsprung ausbildet. Beispielsweise ist der an dem Solarmodul befestigbare Schenkel derart ausgerichtet, dass er an einer Stirnseite des Solarmoduls angeordnet und dort befestigt werden kann. Der andere Schenkel soll sich dagegen im Wesentlichen in die Einschubrichtung erstrecken. Um die Wirkung der Herausziehsperre zu verbessern, ist der den Einsteckvorsprung ausbildende Schenkel mit seinem dem an dem Solarmodul befestigbaren Schenkel abgewandten freien Ende in Richtung des Endanschlags geneigt. Die beiden Schenkel liegen insoweit unter einem bestimmten Winkel zueinander vor, welcher beispielsweise kleiner oder gleich 90° ist. Es sind jedoch auch andere Ausführungsformen denkbar, bei welchen beispielsweise der Winkel kleiner oder gleich 180° ist, insbesondere wenn die Befestigung nicht an der Stirnseite des Solarmoduls vorgesehen ist.

Eine Weiterbildung der Erfindung sieht vor, dass die Einsteckaufnahme auf ihrer dem Solarmodul zugewandten Seite eine Einstecköffnung aufweist und sich ausgehend von dieser zumindest abschnittsweise zur Ausbildung einer Einsteckführung für den Einsteckvorsprung verjüngt. Auf diese Weise kann die Montage des Solarmoduls an oder in der Montagefläche deutlich vereinfacht werden. Die Einstecköffnung weist bevorzugt eine deutlich größere Breite auf als der Einsteckvorsprung. Unter der Breite ist dabei die Erstreckung in die laterale Richtung zu verstehen, welche senkrecht auf der Einsteckrichtung steht und parallel zu der Montagefläche vorliegt. Die Breite der Einstecköffnung ist beispielsweise um wenigstens 10% bis 50%, beispielsweise um wenigstens 25%, größer als die Breite des Einsteckvorsprungs.

Die Position des Einsteckvorsprungs bezüglich der Einsteckaufnahme in lateraler Richtung ist also zunächst bei dem Einbringen des Einsteckvorsprungs durch die Einstecköffnung in die Einsteckaufnahme nicht oder zumindest nur grob festgelegt. Erst bei weiterem Einführen des Einsteckvorsprungs tritt dieser mit einer Seitenwand der Einsteckaufnahme in Berührkontakt, wobei diese die Einsteckführung bildet. Durch die Verjüngung der Einsteckaufnahme in die von der Einstecköffnung abgewandte Seite wird der Einsteckvorsprung in lateraler Richtung in seine Sollposition gedrängt. Besonders bevorzugt weist die Einsteckaufnahme beabstandet von der Einstecköffnung eine Breite auf, welche ungefähr der Breite des Einsteckvorsprungs entspricht oder zumindest lediglich geringfügig größer ist. Ist der Einsteckvorsprung zumindest bereichsweise in diesem Bereich angeordnet, so ist seine Position in lateraler Richtung festgelegt.

Eine Weiterbildung der Erfindung sieht vor, dass eine Solarmodulauflagefläche für ein weiteres Solarmodul an einem ersten Schenkel eines dreischenkligen, insbesondere U-förmigen Befestigungsprofils des Befestigungselements vorliegt und die Einsteckaufnahme in die der Solarmodulauflagefläche zugewandte Richtung von einem zweiten Schenkel des Befestigungsprofils begrenzt ist, wobei die beiden Schenkel von einem dritten Schenkel des Befestigungsprofils miteinander verbunden sind. Das Befestigungsprofil besteht also aus drei Schenkeln. An dem ersten Schenkel liegt die Solarmodulauflagefläche vor, welche zum Abstützen des weiteren Solarmoduls vorgesehen ist. Das weitere Solarmodul grenzt beispielsweise an das mit Hilfe des Befestigungselements befestigte Solarmodul an, insbesondere auf der Seite des Solarmoduls, an welcher das Befestigungselement vorgesehen ist. Der zweite Schenkel begrenzt die Einsteckaufnahme zumindest in die der Solarmodulauflagefläche zugewandte Richtung, also die erste Richtung. Entsprechend liegt die Einsteckaufnahme auf der dem ersten Schenkel abgewandten Seite des zweiten Schenkels vor. An dem zweiten Schenkel ist der Endanschlag des Befestigungselements vorgesehen.

Die Verbindung zwischen dem ersten Schenkel und dem zweiten Schenkel ist über den dritten Schenkel des Befestigungsprofils hergestellt. Die drei Schenkel können prinzipiell beliebig zueinander angeordnet sein, wobei jedoch der erste Schenkel vorzugsweise ausschließlich über den dritten Schenkel mit dem zweiten Schenkel verbunden ist. Besonders bevorzugt ist das Befestigungsprofil U-förmig. Das bedeutet, dass der erste Schenkel und der zweite Schenkel jeweils im Wesentlichen unter einem Winkel von 90° auf den dritten Schenkel treffen. Es können jedoch auch andere geeignete Winkel vorgesehen sein. Selbstverständlich können die Übergänge zwischen den Schenkeln jeweils durch eine Rundung ausgebildet sein. Eine weitere vorteilhafte Ausgestaltung weist neben dem dritten Schenkel einen zusätzlichen Stützschenkel auf, welcher den ersten und den zweiten Schenkel verbindet. Der Stützschenkel ist dabei bevorzugt beabstandet zu dem dritten Schenkel angeordnet und verläuft parallel zu diesem. Insoweit kann das Befestigungsprofil im Querschnitt geschlossen sein.

Dabei kann vorgesehen sein, dass die Solarmodulauflagefläche in der von der Montagefläche abgewandten Richtung von der Einsteckaufnahme beabstandet ist. Zwischen der Solarmodulauflagefläche und der Einsteckaufnahme liegt zumindest der Mittelschenkel des Aufnahmeprofils beziehungsweise der zweite Schenkel des Befestigungsprofils. Zusätzlich liegen üblicherweise der erste Schenkel und der dritte Schenkel des Befestigungsprofils zwischen der Solarmodulauflagefläche und der Einsteckaufnahme. Die Einsteckaufnahme ist somit in vertikaler Richtung von der Solarmodulauflagefläche beabstandet.

Eine Weiterbildung der Erfindung sieht vor, dass die Zahnung oder die Zahnaufnahme an dem zweiten Schenkel ausgebildet sind. Die der Einsteckaufnahme zugeordnete Zahnung beziehungsweise Zahnaufnahme liegt also an dem zweiten Schenkel vor. Beispielsweise werden die Zahnung beziehungsweise die Zahnaufnahme durch Freischneiden und anschließendes Umformen des zweiten Schenkels hergestellt. Die Zahnung oder die Zahnaufnahme erstreckt sich ausgehend von dem zweiten Schenkel in die Einsteckaufnahme hinein.

Eine Weiterbildung der Erfindung sieht vor, dass der zweite Schenkel des Befestigungsprofils einen Mittelschenkel eines die Steckaufnahme zumindest teilweise begrenzenden dreischenkligen Aufnahmeprofils bildet, dessen von dem Mittelschenkel ausgehende Seitenschenkel sich in die der Solarmodulauflagefläche abgewandte Richtung erstrecken. Das Aufnahmeprofil besteht demnach aus drei Schenkeln, nämlich zwei Seitenschenkeln und einem die beiden Seitenschenkel miteinander verbindenden Mittelschenkel. Der Mittelschenkel wird dabei wenigstens bereichsweise, vorzugsweise vollständig, von dem zweiten Schenkel des Befestigungsprofils ausgebildet oder ist zumindest an diesem befestigt. Das Befestigungsprofil begrenzt die Steckaufnahme zumindest bereichsweise. Insbesondere liegt an dem Mittelschenkel der Endanschlag vor, während die beiden Seitenschenkel die Steckaufnahme in lateraler Richtung begrenzen. Zu diesem Zweck erstrecken sich die Seitenschenkel ausgehend von dem Mittelschenkel in die der Solarmodulauflagefläche abgewandte Richtung. Die Seitenschenkel laufen also von dem Mittelschenkel auf die Montagefläche zu.

Eine Weiterbildung der Erfindung sieht vor, dass von den Seitenschenkeln des Aufnahmeprofils auf der dem Mittelschenkel abgewandten Seite jeweils ein im Wesentlichen parallel zu der Solarmodulauflagefläche verlaufendes Montageflächenauflageelement ausgeht. Über das Montageflächenauflageelement steht das Befestigungselement in Auflagekontakt mit der Montagefläche beziehungsweise einem Montageflächenelement. Beispielsweise werden die Montageflächeauflageelemente bei der Montage des Solarmoduls auf ein Montageflächeelement, insbesondere eine Dachlatte beziehungsweise einen Dachsparren, aufgelegt und an diesen befestigt. Zu diesem Zweck sind Befestigungsmittel vorgesehen. Insbesondere werden die Montageflächenauflageelemente mittels jeweils wenigstens einer Schraubverbindung mit der Montagefläche beziehungsweise dem Montageflächenelement verbunden. Zu diesem Zweck weist beispielsweise jedes der Montageflächenauflageelemente eine Schraubenaufnahme auf, insbesondere in Form eines Lochs oder eines Langlochs. Die Montageflächeauflageelemente gehen von den Seitenschenkeln des Aufnahmeprofils aus und erstrecken sich in die von diesem abgewandte Richtung. Dabei verlaufen sie vorzugsweise parallel zu der Solarmodulauflagefläche, wobei alternativ selbstverständlich auch eine nichtparallele Anordnung vorgesehen sein kann. Eine Weiterbildung der Erfindung sieht vor, dass von dem Montageflächenauflageelement wenigstens ein Stützvorsprung ausgeht, der ein Montageflächenelement der Montagefläche, insbesondere eine Dachlatte, bei Anordnung des Befestigungselements an oder in der Montagefläche zur Abstützung hintergreift. Der Stützvorsprung ist dabei derart ausgebildet, dass er einem Schwerkrafteinfluss auf das Befestigungselement entgegenwirkt, also ein Herabrutschen des Befestigungselements verhindert. Auf diese Weise wird die Stabilität der Befestigung des Befestigungselements an beziehungsweise in der Montagefläche verbessert. Beispielsweise liegt das Montageflächeauflagenelement an dem Montageflächenelement, beispielsweise einer Dachlatte, an. Besonders bevorzugt ist es dabei, wenn das Montageflächenauflageelement, von welchem der Stützvorsprung ausgeht, auf einer ersten Seite des Montageflächenelements und der Stützvorsprung an einer zweiten, zu der ersten Seite unmittelbar benachbarten Seite, anliegt.

Eine Weiterbildung der Erfindung sieht vor, dass die Einsteckaufnahme in Richtung der Montagefläche offen ist und der Einsteckvorsprung in der Ruheposition auf einer von der Montagefläche gebildeten oder an der Montagefläche vorliegenden Stützfläche aufliegt. Die Stützfläche definiert insoweit die Ruheposition des Halteelements. Das Befestigungselement beziehungsweise dessen Aufnahmeprofil umgreift also die Einsteckaufnahme im Querschnitt gesehen nicht vollständig. Beispielsweise begrenzt der Mittelschenkel die Einsteckaufnahme in vertikaler Richtung nach oben, während die Seitenschenkel sie in lateraler Richtung beidseitig begrenzen. In vertikaler Richtung nach unten, also in Richtung der Montagefläche, ist die Einsteckaufnahme jedoch offen, in dieser Richtung also nicht von dem Befestigungselement definiert beziehungsweise umgriffen. Entsprechend liegt der Einsteckvorsprung in seiner Ruheposition nicht an dem Befestigungselement an, sondern an der Stützfläche, welche von der Montagefläche gebildet ist oder an dieser vorliegt. Die Stützfläche liegt insbesondere an dem Montageflächenelement vor.

Eine Weiterbildung der Erfindung sieht vor, dass das Befestigungselement an oder im Bereich der Solarmodulauflagefläche eine Schraubenaufnahme für eine Schraubverbindung mit dem weiteren Solarmodul aufweist. Das weitere Solarmodul soll demnach mit Hilfe der Schraubverbindung an dem Befestigungselement befestigbar sein. Zu diesem Zweck ist die Schraubenaufnahme vorgesehen, welche zumindest im Bereich der Solarmodulauflagefläche, insbesondere benachbart zu dieser angeordnet ist. Die Schraubenaufnahme dient der Aufnahme wenigstens einer Schraube der Schraubverbindung und ist bevorzugt sicher an dem Befestigungselement gehalten. Beispielsweise ist die Schraubenaufnahme zwischen dem ersten und dem zweiten Schenkel des Befestigungsprofils angeordnet.

Eine Weiterbildung der Erfindung sieht vor, dass die Schraubenaufnahme eine mit dem Befestigungselement verbundene Schraubenmutter oder ein mit dem Befestigungselement verbundenes Aufnahmeelement aus einem durch Anbringen der Schraubverbindung verformbaren Material ist oder von einem Bereich des Befestigungselements gebildet ist. Grundsätzlich kann die Schraubenaufnahme beliebig ausgestaltet sein. Beispielsweise liegt sie als Schraubenmutter vor, welche an dem Befestigungselement befestigt, beispielsweise mit diesem verschweißt ist. Die Schraubenmutter ist dabei bevorzugt an dem ersten Schenkel des Befestigungsprofils befestigt, insbesondere auf dessen der Solarmodulauflagefläche abgewandten Seite.

Alternativ kann die Schraubenaufnahme jedoch auch als Aufnahmeelement vorliegen, welches entweder als zusätzliches Element an dem Befestigungselement vorgesehen ist oder von diesem gebildet ist. In ersterem Fall ist das Aufnahmeelement beispielsweise ein Holzstück oder ein Kunststoffstück, in welches die Schraube der Schraubverbindung ohne Weiteres, insbesondere selbstschneidend, eingreifen kann. Alternativ kann das Aufnahmeelement auch von dem Befestigungselement selbst gebildet sein. Beispielsweise ist letzteres derart ausgestaltet, dass die Schraube der Schraubverbindung selbstschneidend in einen Bereich des Befestigungselements eingreifen kann, sodass die Schraube nachfolgend sicher an dem Befestigungselement gehalten ist.

Die Erfindung betrifft weiterhin eine Solarmodulanordnung, mit wenigstens einem an oder in einer Montagefläche angeordneten Solarmodul und mit einem Befestigungssystem, insbesondere gemäß den vorstehenden Ausführungen, wobei das Befestigungssystem wenigstens ein an oder in der Montagefläche befestigtes Befestigungselement und wenigstens ein an dem Solarmodul befestigtes Halteelement aufweist. Dabei ist vorgesehen, dass das Halteelement mindestens einen Einsteckvorsprung und das Befestigungselement mindestens eine Einsteckaufnahme zur Steckaufnahme des Einsteckvorsprungs aufweist, wobei die Einsteckaufnahme eine zwischen einer Aufnahmeunterseite und einer Aufnahmeoberseite bestehende Höhenabmessung aufweist, die größer ist als eine zwischen einer Vorsprungsunterseite und einer Vorsprungsoberseite bestehende Dickenabmessung des Einsteckvorsprungs, wobei zur Bildung einer bei einem Anheben des Einsteckvorsprungs wirkenden Herausziehsperre die Einsteckaufnahme im Bereich ihrer Aufnahmeoberseite eine Zahnungsaufnahme oder Zahnung und der Einsteckvorsprung im Bereich seiner Vorsprungsoberseite eine Zahnung oder Zahnungsaufnahme aufweist, und das Halteelement zusammen mit dem Solarmodul, insbesondere durch Windkrafteinfluss, zwischen einer Ruheposition, in die es durch Schwerkrafteinfluss gedrängt ist, und einer Anschlagposition, in der es an einem von dem Befestigungselement gebildeten Endanschlag anliegt, verlagerbar ist. Auf die Vorteile des hier verwendeten Befestigungssystems, bestehend aus dem Befestigungselement und dem Halteelement, wurde bereits vorstehend eingegangen. Das Befestigungssystem kann entsprechend gemäß den vorstehenden Ausführungen weitergebildet sein.

Eine Weiterbildung der Erfindung sieht vor, dass wenigstens eines der Solarmodule ein Photovoltaikmodul, ein Solarkollektormodul oder ein Solarkombinationsmodul, bestehend aus wenigstens einem Photovoltaikmodul und wenigstens einem Solarkollektormodul, ist. Das Photovoltaikmodul dient dazu, Sonneneinstrahlung in elektrische Energie umzusetzen. Das Solarkollektormodul wird dagegen verwendet, um ihm zugeführtes Wasser aufgrund der Sonneneinstrahlung zu erwärmen, welches nachfolgend beispielsweise der Heizungsunterstützung dient. Alternativ kann das Solarmodul auch als Solarkombinationsmodul vorliegen. Dieses besteht aus mindestens einem Photovoltaikmodul und mindestens einem Solarkollektormodul, welche insbesondere in vertikaler Richtung übereinander angeordnet sind. Bevorzugt ist dabei das Photovoltaikmodul auf der der Montagefläche abgewandten Seite des Solarkombinationsmoduls vorgesehen.

Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: eine schematische Ansicht einer Solarmodulanordnung mit mehreren Solarmodulen, die mittels eines Befestigungssystems an einer Montagefläche befestigt sind,
- Figur 2: eine Detailansicht eines Bereichs zweier Solarmodule, wobei zwei Befestigungselemente des Befestigungssystems erkennbar sind,
- Figur 3: eine Seitenschnittansicht durch eines der Solarmodule der Solarmodulanordnung, wobei neben dem Befestigungselement ein Halteelement des Befestigungssystems dargestellt ist,
- Figur 4: das Halteelement in einer ersten Ansicht,
- Figur 5: das Halteelement in einer Seitenansicht,
- Figur 6: eine Detailansicht eines Bereichs des Halteelements,
- Figur 7: das Befestigungselement in einer ersten Ansicht,
- Figur 8: das Befestigungselement in einer zweiten Ansicht,
- Figur 9: eine Seitenschnittansicht des Befestigungselements,
- Figur 10: eine Draufsicht des Befestigungselements,
- Figur 11: eine Frontalansicht des Befestigungselements,
- Figur 12: das Befestigungselement sowie das Halteelement in einer ersten Ansicht, und
- Figur 13: das Befestigungselement sowie das Halteelement in einer zweiten Ansicht.

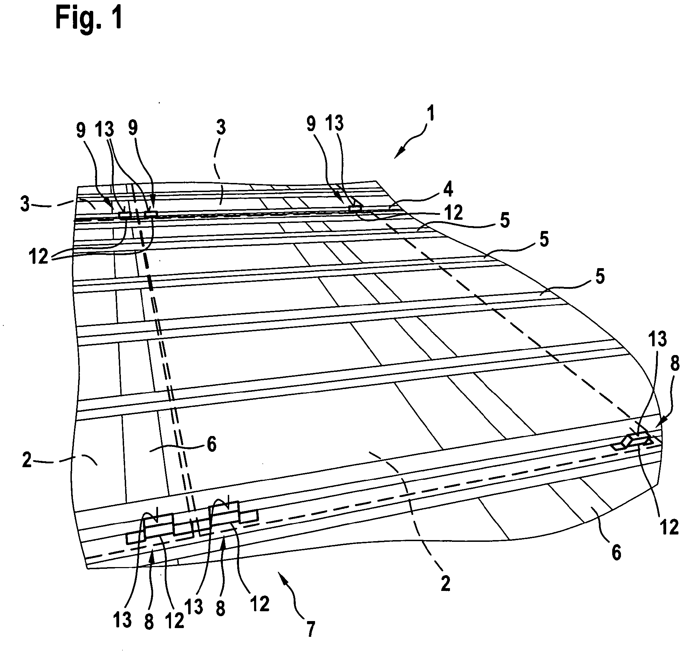

Die Figur 1 zeigt eine schematische Ansicht einer Solarmodulanordnung mit vier lediglich umrisshaft dargestellten Solarmodulen 2 und 3. Die Solarmodule 2 und 3 sind an einer Montagefläche 4 (hier: einem Dach), befestigt, wobei sie unmittelbar über Dachlatten 5, welche hier nur beispielhaft gekennzeichnet sind, angeordnet sind. Die Dachlatten 5 liegen wiederum auf Dachsparren 6 des Dachs 4 auf. Zum Befestigen der Solarmodule 2 und 3 dient ein Befestigungssystem 7, von welchem hier Befestigungselemente 8 und 9 dargestellt sind, auf welche nachfolgend noch näher eingegangen wird.

Die Solarmodule 2 und 3 sind in übereinander liegenden Reihen angeordnet, wobei die unten liegenden Solarmodule mit dem Bezugszeichen 2 und die oben liegenden mit dem Bezugszeichen 3 versehen sind. Analog sind die unten liegenden Befestigungselemente mit dem Bezugszeichen 8 und die oben liegenden Befestigungselemente mit dem Bezugszeichen 9 gekennzeichnet. Grundsätzlich kann eine beliebige Anzahl von Reihen vorliegen, insbesondere auch lediglich eine einzige. Weiter sind die Solarmodule 2 und 3 in nebeneinander liegenden Spalten organisiert, wobei jede der Spalten eine beliebige Anzahl von Solarmodulen 2 beziehungsweise 3 aufweisen kann. Insbesondere kann auch jeweils lediglich ein einziges Solarmodul 2 oder 3 vorgesehen sein. In dem Bereich, in welchem sich die Solarmodule 2 und 3 befinden, ist keine Dacheindeckung erforderlich, da diese von den Solarmodulen 2 und 3 beziehungsweise der Solarmodulanordnung 1 gebildet ist.

Zusätzlich sind hier nicht dargestellte Halteelemente 10 Bestandteil des Befestigungssystems 7, welche mit den Befestigungselementen 8 und 9 zum Halten der Solarmodule 2 und 3 an dem Dach 4 zusammenwirken. Für die Befestigung jedes der Solarmodule 2 und 3 sind hier vier der Befestigungselemente 7 und 8 vorgesehen. Wie später noch deutlich werden wird, sind zwei an jedem Solarmodul 2 oder 3 befestigte Halteelemente 10 mit hier nicht dargestellten Einsteckvorsprüngen 11 in Einsteckaufnahmen 12 der jeweils oberen Befestigungselemente 9 eingebracht. Jedes der Befestigungselemente 8 und 9 weist neben der Einsteckaufnahme eine Solarmodulauflagefläche 13 auf. Die Solarmodule 2 und 3 liegen nun im Bereich ihrer unteren Enden auf den Solarmodulauflageflächen 13 der unteren Befestigungselemente 8 auf.

Die Solarmodule 2 und 3 sind also jeweils mit mindestens zwei Befestigungselementen 8 und 9 an dem Dach 4 befestigt, wobei das Befestigungselement 8 im Bereich eines unteren Endes des Solarmoduls 2 beziehungsweise 3 und das Befestigungselement 9 im Bereich eines oberen Endes des Solarmoduls 2 beziehungsweise 3 angeordnet ist. Auf das Befestigungselement 8 beziehungsweise dessen Solarmodulauflagefläche 13 ist das Solarmodul 2 oder 3 aufgelegt und insbesondere dort befestigt. In das Befestigungselement 9 beziehungsweise dessen Einsteckaufnahme 12 ist der Einsteckvorsprung 11 eines an dem jeweiligen Solarmodul 2 oder 3 befestigten Halteelements 10 eingesteckt.

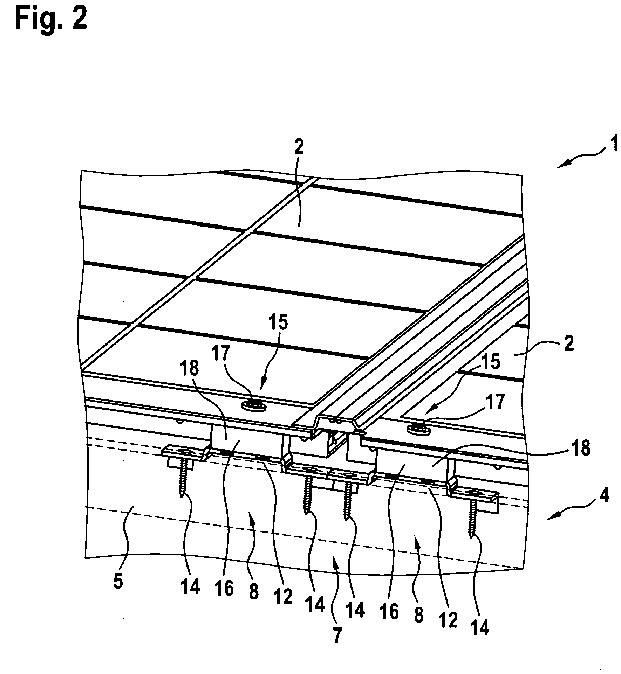

Die Figur 2 zeigt eine Detailansicht eines Ausschnitts zweier nebeneinander angeordneter Solarmodule 2, welche mit Hilfe zweier unmittelbar benachbarter Befestigungselemente 8 an dem Dach befestigt sind. Strichliniert angedeutet ist zudem die Dachlatte 5, an welcher die Befestigungselemente 8 mit Hilfe von Schrauben 14 befestigt sind. Erkennbar sind hier die Einsteckaufnahmen 12, welche von der Dachlatte 5 und den Befestigungselementen 8 gemeinsam ausgebildet sind. Es wird deutlich, dass die hier dargestellten Befestigungselemente 8 die unteren Befestigungselemente 8 sind. Insoweit liegen die Solarmodule 2 auf der hier nicht erkennbaren Solarmodulauflagefläche 13 auf. Zusätzlich sind sie mit Hilfe einer Schraubverbindung 15 an dem jeweiligen Befestigungselement 8 befestigt. Zu diesem Zweck weisen die Befestigungselemente 8 jeweils eine Schraubenaufnahme 16 für wenigstens eine Schraube 17 der Schraubverbindung 15 auf. Die Schraubenaufnahme 16 ist hier als Aufnahmeelement 18 ausgebildet, welches vorzugsweise aus einem durch Anbringen der Schraubverbindung 15 beziehungsweise durch Einschrauben der Schraube 17 verformbaren Material besteht. Beispielsweise ist das Aufnahmeelement 18 aus Holz oder einem Kunststoff. Alternativ kann selbstverständlich das Aufnahmeelement 18 als mit dem Befestigungselement 8 verbundene Schraubenmutter vorliegen oder von einem Bereich des Befestigungselements 8 selbst gebildet sein.

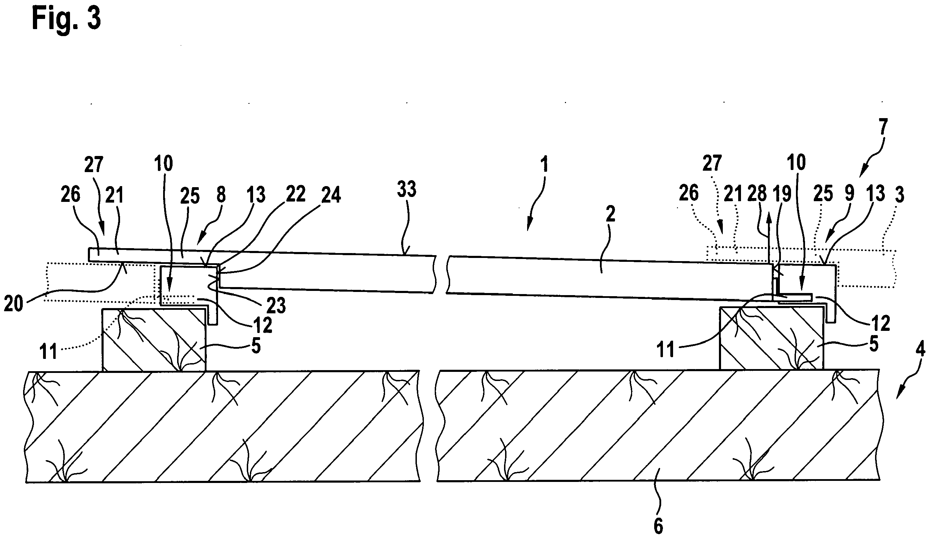

Die Figur 3 zeigt eine Seitenschnittansicht durch das Solarmodul 2 und einen Bereich des Solarmoduls 3, wobei letzteres lediglich angedeutet ist. Zusätzlich ist ein weiteres, nicht näher bezeichnetes Solarmodul auf der dem Solarmodul 3 abgewandten Seite des Solarmoduls 2 angedeutet, wobei - in Bezug auf das Dach 4 - das Solarmodul 3 oberhalb des Solarmoduls 2 und das Solarmodul 2 oberhalb des weiteren Solarmoduls angeordnet ist. Erkennbar ist einer der Dachsparren 6, auf welchem die Dachlatten 5 vorliegen. Den Dachlatten 5 ist jeweils ein Befestigungselement 8 oder 9 zugeordnet. Die Befestigungselemente 8 und 9 sind identisch aufgebaut. Selbstverständlich können zwischen den hier dargestellten Dachlatten 5 weitere Dachlatten vorliegen, welche nicht mit einem Befestigungselement 8 oder 9 versehen sind. Dies ist allein abhängig von dem Abstand der Dachlatten 5 voneinander und der Größe der Solarmodule 2 und 3.

Es ist erkennbar, dass dem Solarmodul 2 eines der Halteelemente 10 zugeordnet ist. Dieses weist einen Einsteckvorsprung 11 auf, welcher nach der Montage des Solarmoduls 2 in der Einsteckaufnahme 12 des Befestigungselements 9 angeordnet ist. Das nicht näher gekennzeichnete Solarmodul greift analog zu dem Solarmodul 2 mit einem Halteelement 10 beziehungsweise dem entsprechenden Einsteckvorsprung 11 in die Einsteckaufnahme 12 des Befestigungselements 8 ein. Auch das Solarmodul 3 verfügt selbstredend über zumindest eines der Halteelemente 10. Insbesondere weist jedes der Solarmodule 2 und 3 eine Anzahl der Halteelemente 10 auf, die der Anzahl der dem jeweiligen Solarmodul 2 oder 3 zugeordneten oberen Befestigungselemente 9 entspricht. Die Halteelemente 10 sind dabei an Stirnseiten 19 der Solarmodule 2 und 3 befestigt. Auf einer der Stirnseite 19 gegenüberliegenden Seite liegt das Solarmodul 2 auf der Solarmodulauflagefläche 13 des Befestigungselements 8 auf. Entsprechend liegt das oberhalb des Solarmoduls 2 vorgesehene Solarmodul 3 auf der Solarmodulauflagefläche 13 des Befestigungselements 9 auf.

Selbstverständlich ist es grundsätzlich möglich, das Solarmodul 2 beziehungsweise 3 nur mit einem der Befestigungselemente 9 zu befestigen, wobei dieses in lateraler Richtung mittig an dem Solarmodul 2 angeordnet wird. Auch das Befestigungselement 8 kann entfallen und die notwendige Abstützung des Solarmoduls 2 auf andere Art und Weise erreicht werden. Bevorzugt liegt jedoch das Befestigungselement 8 vor, welches dann ebenfalls vorzugsweise mittig an dem Solarmodul 2 angeordnet ist. Besonders bevorzugt wird jedoch eine Befestigung des Solarmoduls 2 beziehungsweise 3 mit jeweils zwei der Befestigungselemente 8 und 9 vorgenommen, wobei diese - wie in der Figur 1 erkennbar ist - zueinander beabstandet angeordnet sind.

Aus der Figur 3 ist auch ersichtlich, dass sich zumindest die übereinander angeordneten Solarmodule 2 und 3 teilweise überlappen, damit keine Feuchtigkeit eindringen kann. Das bedeutet, dass das jeweils höher liegende Solarmodul 3 das jeweils tiefer liegende Solarmodul 2 teilweise übergreift. Insoweit ist ein Wind- und Feuchtigkeitsschutz realisiert. Ferner kann auch eine Überlappung seitlich aneinandergrenzender Solarmodule vorgesehen sein, um auch hier den Wind- und Feuchtigkeitsschutz zu erzielen. Es liegt also bevorzugt eine geschuppte Anordnung der Solarmodule 2 und 3 der Solarmodulanordnung 1 vor.

Aus der Figur 3 ist erkennbar, dass das Solarmodul 2 selbst nicht im Bereich des Befestigungselements 9 vorliegt oder in dieses eingreift. Vielmehr greift lediglich der Einsteckvorsprung 11 des Halteelements 10, welches an dem Solarmodul 2 stirnseitig, nämlich an der Stirnseite 19, befestigt ist, in die Einsteckaufnahme 12 des Befestigungselements 9 ein. In der abgebildeten Montageposition ist der Einsteckvorsprung 11 vollständig in die Einsteckaufnahme 12 eingesteckt. In dieser Montageposition liegt eine Unterseite 20 eines an dem Solarmodul 2 ausgebildeten Flachstegs 21 auf der Solarmodulauflagefläche 13 des Befestigungselements 8 auf. Das Solarmodul 2 weist dabei eine Stufe 22 auf, wodurch seine Dicke reduziert ist, sodass der Flachsteg 21 vorliegt. Die Unterseite 20 des Flachstegs 21 bildet daher eine Stufenfläche der Stufe 22, während die andere Stufenfläche nunmehr von einer der Stirnseite 19 gegenüberliegenden weiteren Stirnseite 23 gebildet ist.

Wird bei der Montage nach dem vollständigen Einschieben des Einsteckvorsprungs 11 in die Einsteckaufnahme 12 das Solarmodul 2 abgesetzt und losgelassen, so wird es - je nach Einstecktiefe des Einsteckvorsprungs 11 in die Einsteckaufnahme 12 - gegebenenfalls noch so weit nach unten rutschen, bis die Stirnseite 23 des Solarmoduls 2 an einer seitlichen Anlagefläche 24 des Befestigungselements 8 anliegt. Der Flachsteg 21 gliedert sich in zwei Abschnitte, nämlich - ausgehend von der Stirnseite 23 - in einen Auflegesteg 25 und - in Längsrichtung daran anschließend - in einen Überlappungssteg 26, der bis zum Ende des Solarmoduls 2 reicht. Der Auflegesteg 25 übergreift das Befestigungselement 8, sodass er die Unterseite 20 aufweist, welche auf der Solarmodulauflagefläche 13 des Befestigungselements 8 aufliegt. Der Überlappungssteg 26 erstreckt sich schließlich - in Längsrichtung ausgehend von dem Befestigungselement 8 - weiter und übergreift dabei das an das Solarmodul 2 eventuell anschließende, hier nicht näher gekennzeichnete Solarmodul, sodass die überlappende Anordnung realisiert ist.

Durch die hier vorgestellte Anordnung der Solarmodule 2 und 3 ist es möglich, diese auch dann zu montieren, wenn bereits Solarmodule 2 und/oder 3 auf dem Dach 4 angeordnet sind. Insbesondere ist es möglich, ein einzelnes der Solarmodule 2 und 3 aus der Solarmodulanordnung 1 zu entnehmen, ohne dass davon benachbarte Solarmodule 2 und 3 beeinträchtigt werden. Ebenso ist ein erneutes Einsetzen des entnommenen Solarmoduls 2 oder 3 beziehungsweise das Einsetzen eines Ersatzsolarmoduls problemlos möglich. Dies wird erreicht, indem die Solarmodule 2 und 3 nicht miteinander in Berührkontakt stehen. Vielmehr wird die Befestigung der Solarmodule 2 und 3, also auch deren Abstützung in vertikaler Richtung, allein mittels der Befestigungselemente 8 und 9 erzielt. Dennoch ist es möglich, die Solarmodule 2 und 3 - wie in der Figur 3 gezeigt - einander überlappend beziehungsweise geschuppt anzuordnen. Entsprechend können die Solarmodule 2 und 3 trotz geschuppter Anordnung einfach montiert werden.

Bevorzugt wird man bei der Montage jedoch selbstverständlich derart vorgehen, dass man zunächst die tiefer gelegenen Solarmodule 2 und anschließend die höher gelegenen Solarmodule 3 unter Überlappung der Solarmodule 2 anordnet. Der von dem Überlappungssteg 26 des Solarmoduls 3 überlappte Bereich des tiefer gelegenen Solarmoduls 2 wird als Überlappungsbereich 27 bezeichnet. Dieser wird vorzugsweise derart ausgebildet, dass einerseits die aktive Fläche der Solarmodule 2 und 3 geringstmöglich verkleinert wird, andererseits jedoch die Überlappung ausreichend groß ist, um ein Eindringen von Wind und Feuchtigkeit zwischen die Solarmodule 2 und 3 zu verhindern. Zusätzlich kann in dem Überlappungsbereich 27 wenigstens eine hier nicht dargestellte Dichtung angeordnet werden.

Trotz der überlappenden beziehungsweise geschuppten Anordnung der Solarmodule 2 und 3 der Solarmodulanordnung 1 sind die Solarmodule 2 und 3 nach der Montage einer Windlast unterworfen, welche insbesondere von der momentan vorliegenden Windstärke, jedoch auch von anderen Faktoren, wie beispielsweise der Größe und der Geometrie der Solarmodule 2 und 3 abhängig ist. Diese Windlast bewirkt unter Umständen eine Windkraft, welche auf ein Abheben der Solarmodule 2 und 3 von dem Dach 4 gerichtet ist. Die Windkraft wirkt insoweit zumindest in die durch den Pfeil 28 angedeutete Richtung. Weil das Solarmodul 2 auf seiner einen Seite an dem Befestigungselement 8 mit Hilfe der Schraubverbindung 15 befestigt ist (hier nicht dargestellt), auf der anderen Seite der Einsteckvorsprung 11 jedoch lediglich in die Einsteckaufnahme 12 eingesteckt ist, kann die Windlast eine Durchbiegung des Solarmoduls 2 oder 3 verursachen. Diese Durchbiegung bewirkt ein wenigstens teilweises Herausziehen des Einsteckvorsprungs 11 aus der Einsteckaufnahme 12, wodurch sich die Durchbiegung noch verstärken kann. Dieses Durchbiegen soll durch entsprechende Ausführung des Befestigungssystems 7 verhindert werden.

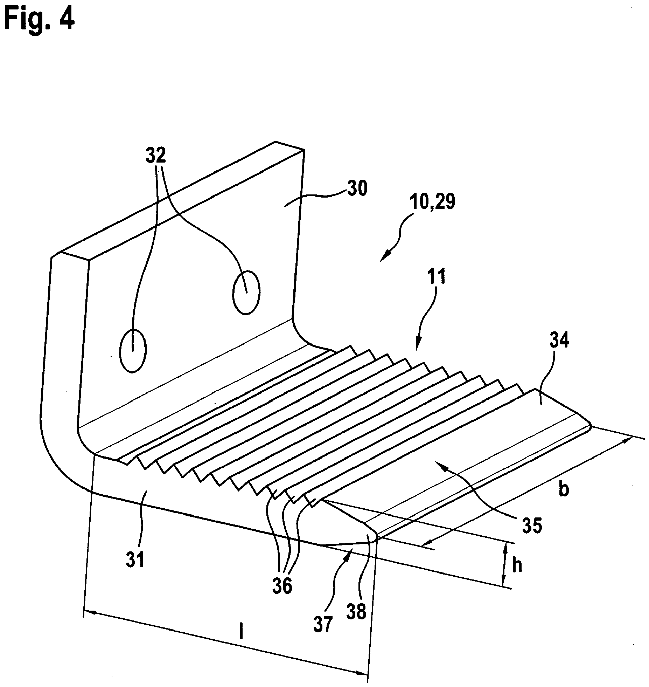

Die Figur 4 zeigt eine erste Ansicht des Halteelements 10. Es wird deutlich, dass das Halteelement 10 in Form eines Haltewinkels beziehungsweise Winkelelements 29 vorliegt. Das Halteelement 10 besteht vorzugsweise aus Metall, insbesondere aus Aluminium. Bevorzugt ist es als Aluminiumprofil, insbesondere im Strangpressverfahren, hergestellt. Handelt es sich um ein Strangpressprofil, so wird dieses in Streifen zerschnitten, wodurch das jeweilige Halteelement 10 entsteht. Das Halteelement 10 weist einen Montageschenkel 30 und einen Einsteckschenkel 31 auf. Der Winkel α zwischen Montageschenkel 30 und Einsteckschenkel 31 beträgt höchstens 90°, ist jedoch bevorzugt kleiner als 90°. Beispielsweise beträgt der Winkel α 80 bis 85°. Der Montageschenkel 30 ist mit zwei Durchgangslöchern 32 versehen, in die Befestigungsschrauben (nicht dargestellt) eingesteckt werden können, um das Halteelement 10 an der Stirnseite 19 des zugehörigen Solarmoduls 2 oder 3 zu befestigen. Nach dem Befestigen ragt demzufolge der Einsteckschenkel 31 von der Stirnseite 19 des Solarmoduls 2 weg, so wie dies aus der Figur 3 ersichtlich ist. Ist der Einsteckschenkel 31 unter einem von 90° verschiedenen Winkel an dem Montageschenkel 30 angeordnet, so verläuft er nicht parallel zu einer Oberseitenebene 33 (siehe Figur 3) des Solarmoduls 2.

Der Einsteckschenkel 31 liegt entsprechend unter dem Winkel α zu der Stirnseite 19 vor. Insbesondere steht er bei einem Winkel von α = 90° senkrecht auf der Stirnseite 19. Der Einsteckschenkel 31 ist auf seiner Oberseite mit einer Zahnungsaufnahme 35 versehen, die aus einer Vielzahl von Zahnaufnahmen 36 (hier lediglich beispielhaft gekennzeichnet) besteht. Die Zahnungsaufnahme 35 erstreckt sich über die gesamte Breite b des Einsteckschenkels 31. Über die Länge I des Einsteckschenkels 31 geht die Zahnungsaufnahme 35 im Bereich eines freien Endes 37 des Einsteckschenkels 31 in einen Einführkeil 38 über. Die Zahnaufnahmen 36 werden durch über die Breite b gerade verlaufende Vertiefungen gebildet und liegen parallel zueinander.

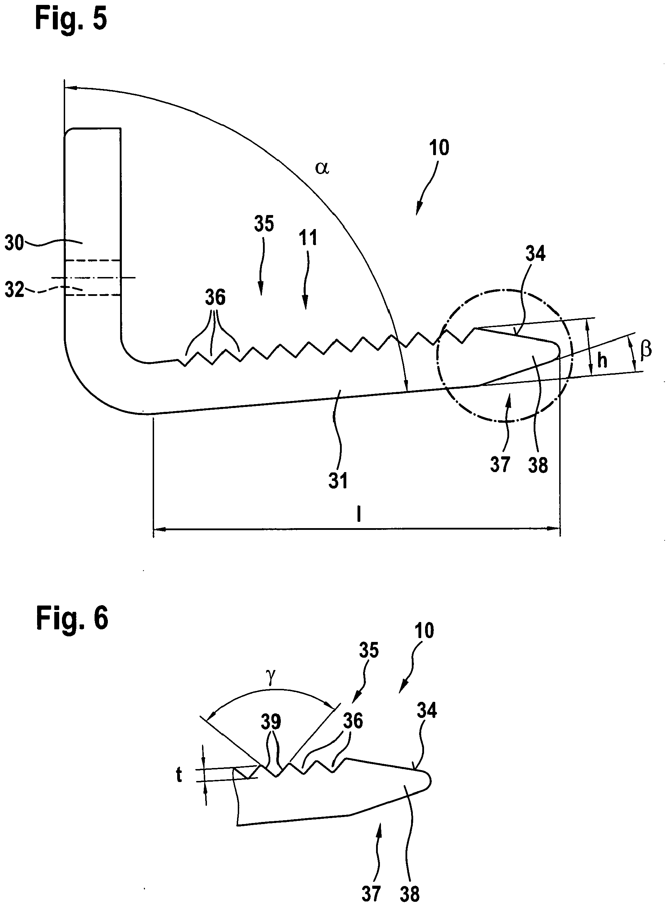

Die Figur 5 zeigt eine Seitenansicht des Halteelements 10. In dieser ist zusätzlich zu erkennen, dass eine Unterseite des Einführkeils 38 gegenüber einer Unterseite des Einsteckschenkels 31 jeweils um den Winkel β geneigt ist, wobei β vorzugsweise kleiner als 30°, insbesondere kleiner oder gleich 15° ist. Entsprechendes gilt für eine Oberseite des Einführkeils 38.

Die Figur 6 zeigt eine Detailansicht des freien Endes 37 des Einsteckschenkels 31, wobei der in der Figur 5 gekennzeichnete Bereich vergrößert dargestellt ist. Dabei wird deutlich, dass die Zahnaufnahmen 36 derart ausgeführt sind, dass ihre Flanken 39 unter einem Winkel γ von 70° bis 85°, vorzugsweise 78°, zueinander angeordnet sind. Die Tiefe t der Zahnungsaufnahme 35 beträgt etwa 0,5 mm bis 1,5 mm, bevorzugt 1,0 mm.

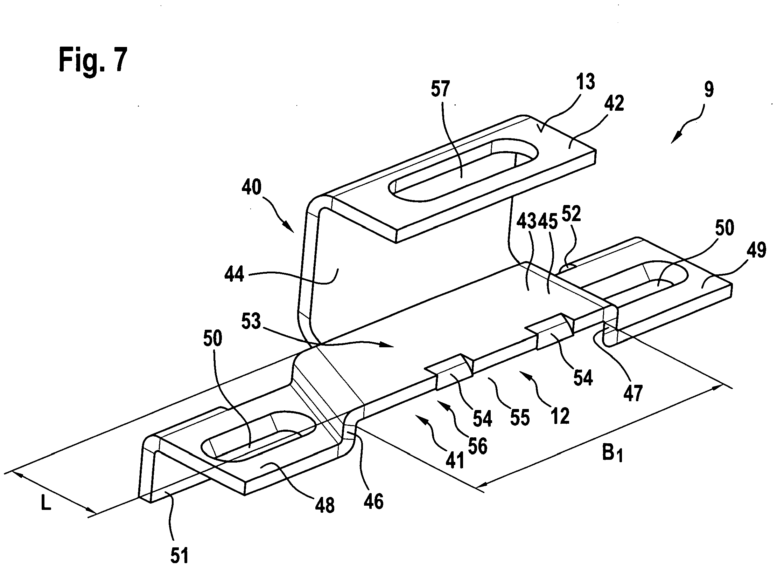

Die Figuren 7 bis 11 zeigen verschiedene Ansichten des Befestigungselements 9, wobei diese durch die identische Ausbildung analog auch für das Befestigungselement 8 heranzuziehen sind. Das Befestigungselement 9 besteht vorzugsweise aus Metall, insbesondere aus Metallblech, vorzugsweise Aluminiumblech. Es wird insbesondere im Stanz-Biege-Verfahren hergestellt.

Die Figur 7 zeigt eine erste Ansicht des Befestigungselements 9. Es wird deutlich, dass das Befestigungselement 9 im Wesentlichen aus einem Befestigungsprofil 40 und einem Aufnahmeprofil 41 besteht. Die Solarmodulauflagefläche 13 liegt an einem ersten Schenkel 42 des Befestigungsprofils 40 vor, während die Einsteckaufnahme 12 in Richtung der Solarmodulauflagefläche 13 von einem zweiten Schenkel 43 begrenzt ist. Die beiden Schenkel 42 und 43 werden von einem dritten Schenkel 44 miteinander verbunden. Zwischen den Schenkeln 42 und 43 des Befestigungsprofils 40 kann das bereits vorstehend erläuterte Aufnahmeelement 18, welches die Schraubenaufnahme 16 ausbildet, angeordnet werden.

Die drei Schenkel 42, 43 und 44 bilden das Befestigungsprofil 40, welches bevorzugt U-förmig ausgebildet ist. Insoweit liegen bevorzugt die beiden Schenkel 42 und 43 parallel zueinander. Der zweite Schenkel 43 stellt zugleich einen Mittelschenkel 45 dar, von welchem ausgehend sich zwei Seitenschenkel 46 und 47 in die von der Solarmodulauflagefläche 13 abgewandte Richtung erstrecken. Der Mittelschenkel 45 und die beiden Seitenschenkel 46 und 47 sind Bestandteil des Aufnahmeprofils 41, welches im Wesentlichen die Einsteckaufnahme 12 definiert. Dabei begrenzt der Mittelschenkel 45 die Einsteckaufnahme 12 nach oben, während die Seitenschenkel 46 und 47 sie in lateraler Richtung begrenzen.

Von den Seitenschenkeln 46 und 47 ausgehend erstreckt sich jeweils ein Montageflächenauflageelement 48 beziehungsweise 49 in die jeweils von dem Mittelschenkel 45 abgewandte Richtung. Die Montageflächenauflageelemente 48 und 49 verlaufen dabei bevorzugt parallel zu dem Schenkel 42 und dem Mittelschenkel 45 beziehungsweise zu der Solarmodulauflagefläche 13. Die Montageflächenauflageelemente 48 und 49 weisen jeweils zumindest eine Schraubenaufnahme 50 auf. Mit den Montageflächenauflageelementen 48 und 49 stützt sich das Befestigungselement 9 auf dem Dach 4 beziehungsweise einem Bereich des Dachs 4 oder einem Dachelement ab, beispielsweise auf der Dachlatte 5, wie anhand der Figuren 1 bis 3 erläutert. Durch die Schraubenaufnahmen 50 können Schrauben hindurchgeführt und somit die Montageflächenauflageelemente 48 und 49 mit dem Dach 4 verbunden beziehungsweise an diesem befestigt werden. Von den Montageflächenauflageelementen 48 und 49 geht jeweils ein Stützvorsprung 51 beziehungsweise 52 aus, der sich in die von der Solarmodulauflagefläche 13 abgewandte Richtung erstreckt.

Bei einer Anordnung des Befestigungselements 9 an der Dachlatte 5 liegen somit bevorzugt die Montageflächenauflageelemente 48 und 49 auf einer ersten Seite der Dachlatte 5 und die Stützvorsprünge 51 und 52 auf einer der ersten Seite benachbarten zweiten Seite der Dachlatte 5 an. Die Stützvorsprünge 51 und 52 sind dabei derart ausgerichtet, dass sie einem auf das Befestigungselement 9 wirkenden Schwerkrafteinfluss entgegenwirken. Mittels der Montageflächenauflageelemente 48 und 49 beziehungsweise der Stützvorsprünge 51 und 52 kann das Befestigungselement 9 zumindest kurzfristig - insbesondere bis zur endgültigen Befestigung mit Hilfe von durch die Schraubenaufnahmen 50 hindurchgeführten Schrauben 14 - an dem Dach 4 beziehungsweise auf der Dachlatte 5 angeordnet werden.

An dem Mittelschenkel 45 ist eine Zahnung 53 ausgebildet, die aus zwei Zähnen 54 besteht, welche in lateraler Richtung voneinander beabstandet sind. Die Zähne 54 erstrecken sich jeweils lediglich über einen Teil der Breite B₁, welche die Einsteckaufnahme 12 im Bereich einer Einstecköffnung 55 aufweist. Beispielsweise erstrecken sich die Zähne 54 jeweils über 10% bis 20%, insbesondere 15%, der Breite B₁.

Die Einsteckaufnahme 12 weist im Bereich der Einstecköffnung 55 ihre größte Breite B₁ auf. Diese ist bevorzugt deutlich größer als die Breite b des Einsteckschenkels 31 beziehungsweise des Einsteckvorsprungs 11. Beispielsweise ist die Breite B₁ um mindestens 10% bis 50% größer als die Breite b. Auf diese Weise wird ein einfaches Einführen des Einsteckvorsprungs 11 in die Einsteckaufnahme 12 durch die Einstecköffnung 55 ermöglicht.

Ausgehend von der Einstecköffnung 55 verjüngt sich die Einsteckaufnahme 12 jedoch zumindest abschnittsweise. Auf diese Weise ist eine Einsteckführung 56 ausgebildet. In dem hier dargestellten Ausführungsbeispiel verjüngt sich die Einsteckaufnahme 12 über ihre gesamte Längserstreckung L, bis sie auf der der Einstecköffnung 55 abgewandten Seite eine Breite B₂ erreicht hat (nicht dargestellt). Die Breite B₂ entspricht vorzugsweise im Wesentlichen der Breite b des Einsteckvorsprungs 11 beziehungsweise ist lediglich geringfügig größer als diese. Auf diese Weise wird eine Führung des Einsteckvorsprungs 11 in seine Sollposition während des Einführens in die Einsteckaufnahme 12 erzielt. In dem vorliegenden Ausführungsbeispiel erfolgt die Verjüngung der Einsteckaufnahme 12 in Längsrichtung stetig, insbesondere linear.

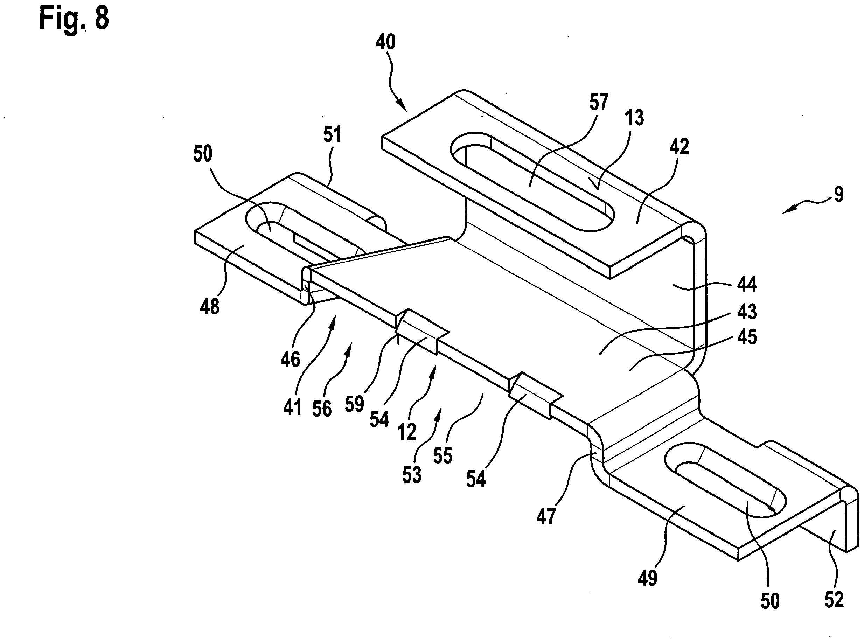

Die Figur 8 zeigt eine alternative Ansicht des Befestigungselements 9. Hier ist deutlich zu erkennen, dass die Verjüngung der Einsteckaufnahme 12 durch die schräge Anordnung lediglich eines der Seitenschenkel 46 und 47 erzielt wird. Insbesondere ist der Seitenschenkel 46 schräg angeordnet, während der Seitenschenkel 47 gerade vorliegt (jeweils bezüglich der Längsrichtung). Erkennbar ist auch, dass in dem ersten Schenkel 42 des Befestigungsprofils 40 eine langlochartige Durchtrittsöffnung 57 vorliegt, durch die beispielsweise eine Schraube zu dem Aufnahmeelement 18 gelangen kann. Die Durchtrittsöffnung 57 durchgreift insoweit die Solarmodulauflagefläche 13.

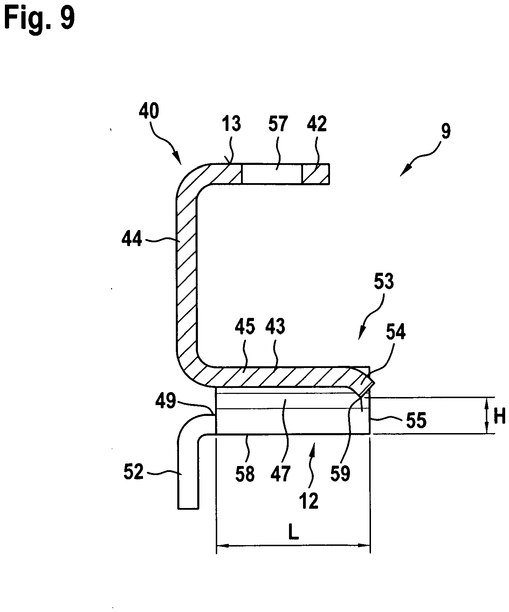

Die Figur 9 zeigt eine Seitenschnittansicht des Befestigungselements 9. In dieser Ansicht wird deutlich, dass in der Höhe H der Einsteckaufnahme 12 die Zahnung 53 mit den Zähnen 54 berücksichtigt sein soll. Sie erstreckt sich insoweit von einer Aufnahmeunterseite 58 bis zu einer Aufnahmeoberseite 59, welche von dem Mittelschenkel 45, insbesondere jedoch auch von dem Zahn 54 definiert ist. Anders ausgedrückt beschreibt die Höhe H bevorzugt die kleinste Höhe der Einsteckaufnahme 12 über ihre Länge L.

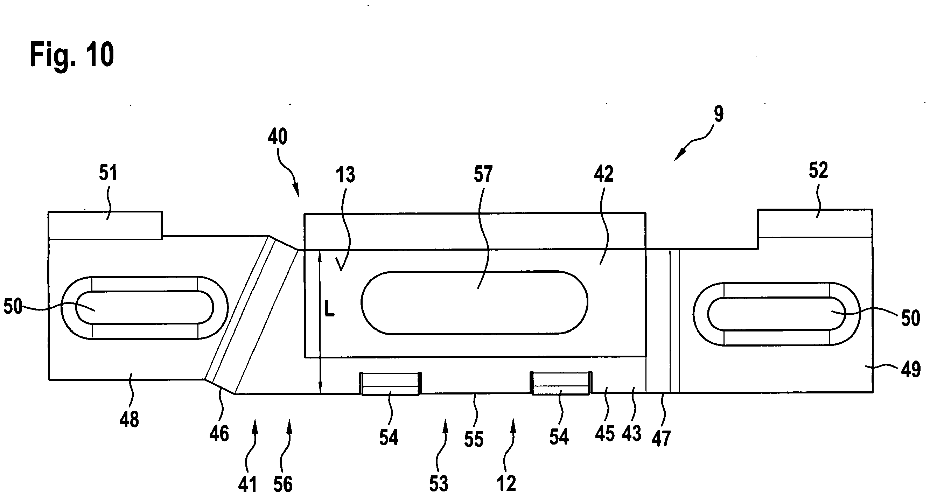

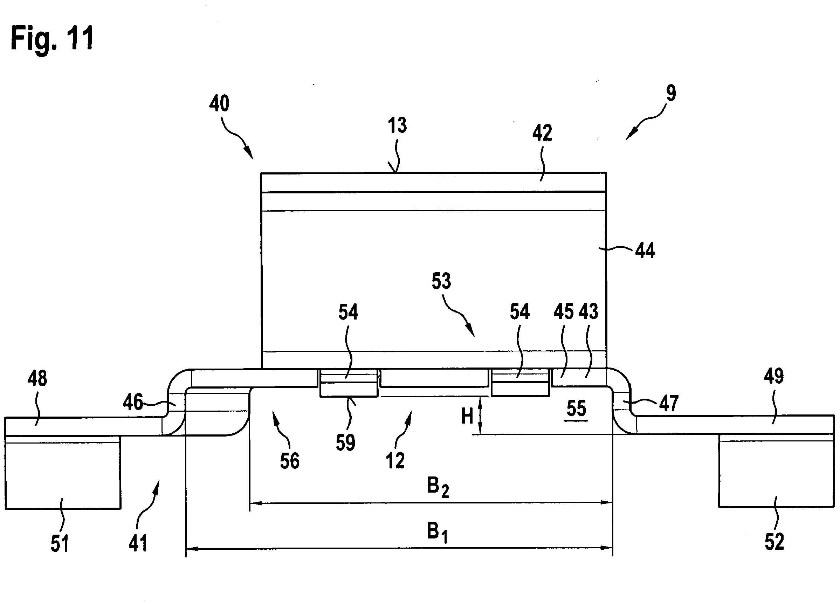

Die Figuren 10 und 11 zeigen eine Draufsicht und eine Frontalansicht des Befestigungselements 9, wobei hier nochmals die Breiten B₁ und B₂, die Länge L und die Höhe H angedeutet sind.

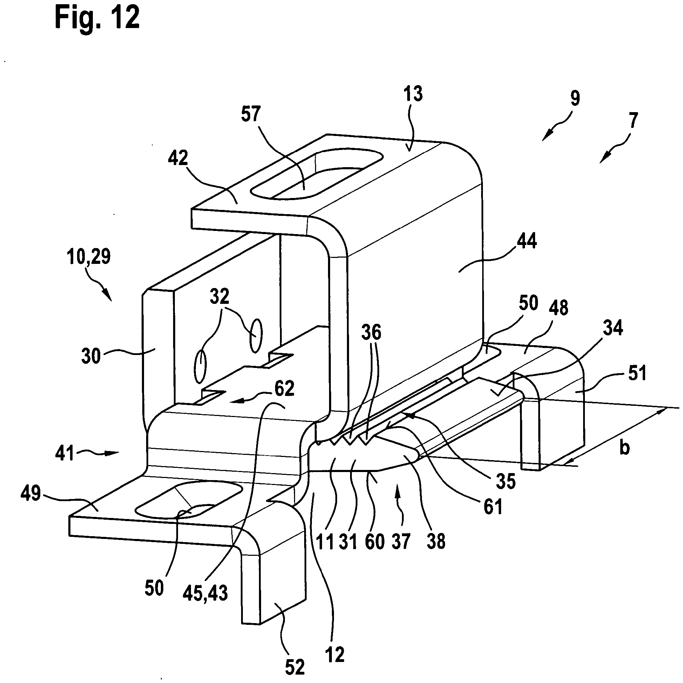

Die Figur 12 zeigt das Zusammenwirken des Befestigungselements 9 mit dem Halteelement 10. Beide Elemente sind gemäß den vorstehenden Ausführungen ausgebildet, sodass insoweit auf diese verwiesen wird. Zusätzlich sei noch angemerkt, dass sich die Höhe h des Einsteckvorsprungs 11 beziehungsweise des Einsteckschenkels 31 zwischen einer Vorsprungsunterseite 60 und einer Vorsprungsoberseite 61 bemisst, wobei die Höhe h die Zahnungsaufnahme 35 berücksichtigt und insoweit bevorzugt die größte Höhe des Einsteckvorsprungs 11 über dessen Länge I darstellt, insbesondere unter Berücksichtigung des Winkels α. Beispielsweise entspricht also h bei einem Winkel α von ungleich 90° der Strecke in vertikaler Richtung zwischen dem tiefsten Punkt der Vorsprungsunterseite 60 und dem höchsten Punkt der Vorsprungsoberseite 61.

Weil das Halteelement 10 an dem Solarmodul 2 beziehungsweise 3 befestigt ist, wirkt die an dem Solarmodul 2 beziehungsweise 3 angreifende Windlast auch auf das Halteelement 10. Bei entsprechend starker Windlast wird insoweit das Halteelement 10 in Richtung des Pfeils 28 (siehe Figur 3) ausgelenkt. Dabei ist das Halteelement 10 zwischen einer Ruheposition und einer Anschlagposition verlagerbar. In der Ruheposition liegt es auf dem Dach 4 beziehungsweise einem Montageflächenelement, insbesondere der Dachlatte 5 auf. Alternativ kann selbstverständlich die Einsteckaufnahme 12 in Richtung des Dachs 4 geschlossen sein, sodass das Halteelement 10 auf einem von dem Befestigungselement 9 gebildeten Boden der Einsteckaufnahme 12 in seiner Ruheposition vorliegt. In die Ruheposition wird das Halteelement 10 durch Schwerkrafteinfluss gedrängt. Insoweit liegt es in dieser vor, solange der Windkrafteinfluss kleiner ist als der Schwerkrafteinfluss.

Gilt dies nicht mehr, so wird das Halteelement 10 zusammen mit dem Solarmodul 2 beziehungsweise 3 aus der Ruheposition in Richtung des Pfeils 28 ausgelenkt, bis es seine Anschlagposition erreicht. Diese ist in der Figur 12 angedeutet. In der Anschlagposition liegt das Halteelement 10 beziehungsweise sein Einsteckvorsprung 11 mit der Vorsprungsoberseite 61 an einem Endanschlag an, der von der Aufnahmeoberseite 59 beziehungsweise dem Mittelschenkel 45 gebildet ist. In dieser Anschlagposition wirkt die Zahnung 53 mit der Zahnungsaufnahme 35 zusammen. Das bedeutet, dass die Zähne 54 in zumindest eine der Zahnaufnahmen 36 eingreifen. Auf diese Weise wird in der Anschlagposition verhindert, dass das Halteelement 10 in Längsrichtung aus der Einsteckaufnahme 12 herausverlagert wird. Insbesondere wird das Halteelement 10 in Längsrichtung festgesetzt. Auf diese Weise wird die vorstehend erläuterte Durchbiegung des Solarmoduls 2 effektiv verhindert.

Gleichzeitig soll jedoch auch eine einfache Montage des Solarmoduls 2 beziehungsweise 3 realisiert sein. Entsprechend steht während der Montage die Zahnung 53 außer Eingriff mit der Zahnungsaufnahme 35, ist also in vertikaler Richtung von dieser beabstandet. Dies wird erreicht, indem die Höhenabmessung H der Einsteckaufnahme 12 größer ist als die Dickenabmessung h des Einsteckvorsprungs 11. Eine durch die Zahnung 53 und die Zahnungsaufnahme 35 gebildete Herausziehsperre 62 wirkt insoweit lediglich bei einem Anheben des Einsteckvorsprungs 11 beziehungsweise des Halteelements 10. Die Herausziehsperre 62 ist also als Anhebeherausziehsperre ausgebildet.

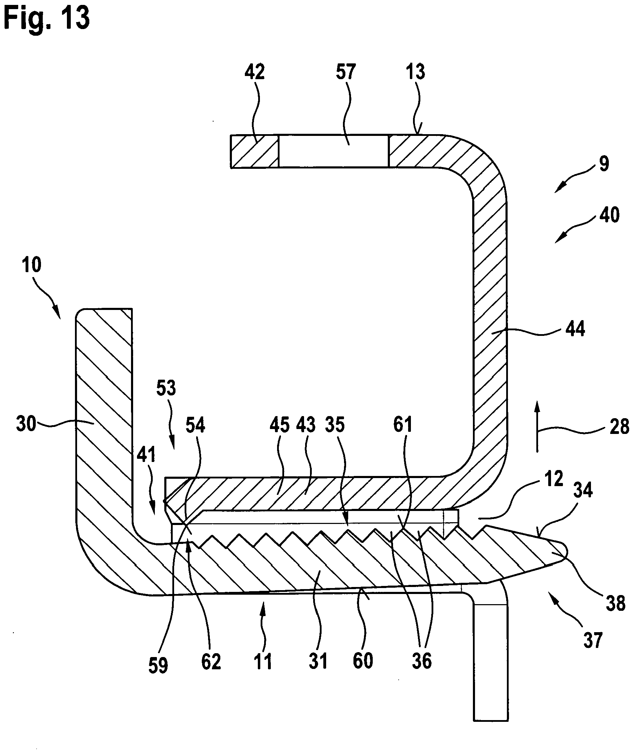

Die Figur 13 zeigt das Befestigungselement 9 und das Halteelement 10 in einer Seitenschnittansicht. Dabei befindet sich das Halteelement 10 in seiner Ruheposition, liegt also auf dem hier nicht dargestellten Dachelement, insbesondere der Dachlatte 5, auf. Es wird deutlich, dass in dieser Ruheposition das Halteelement 10 ohne Weiteres in Längsrichtung verschoben werden kann, ohne dass die Herausziehsperre 62 greift. Es ist also sowohl eine einfache Montage als auch eine einfache Demontage des Solarmoduls 2 beziehungsweise 3 möglich.

## Patentansprüche

1. Befestigungssystem (7) zur Befestigung wenigstens eines an oder in einer Montagefläche (4) anzuordnenden Solarmoduls (2,3) einer Solarmodulanordnung (1), mit mindestens einem an oder in der Montagefläche (4) befestigbaren Befestigungselement (8,9) und mindestens einem an dem Solarmodul (2,3) befestigbaren Halteelement (10), **dadurch gekennzeichnet, dass** das Halteelement (10) mindestens einen Einsteckvorsprung (11) und das Befestigungselement (8,9) mindestens eine Einsteckaufnahme (12) zur Steckaufnahme des Einsteckvorsprungs (11) aufweist, wobei die Einsteckaufnahme (12) eine zwischen einer Aufnahmeunterseite (58) und einer Aufnahmeoberseite (59) bestehende Höhenabmessung (H) aufweist, die größer ist als eine zwischen einer Vorsprungsunterseite (60) und einer Vorsprungsoberseite (61) bestehende Dickenabmessung (h) des Einsteckvorsprungs (11), wobei zur Bildung einer bei einem Anheben des Einsteckvorsprungs (11) wirkenden Herausziehsperre (62) die Einsteckaufnahme (12) im Bereich ihrer Aufnahmeoberseite (59) eine Zahnungsaufnahme oder Zahnung (53) und der Einsteckvorsprung (11) im Bereich seiner Vorsprungsoberseite (61) eine Zahnung oder Zahnungsaufnahme (35) aufweist, und das Halteelement (10) zusammen mit dem Solarmodul (2,3), insbesondere durch Windkrafteinfluss, zwischen einer Ruheposition, in die es durch Schwerkrafteinfluss gedrängt ist, und einer Anschlagposition, in der es an einem von dem Befestigungselement (8) gebildeten Endanschlag anliegt, verlagerbar ist.

2. Befestigungssystem nach Anspruch 1, **dadurch gekennzeichnet, dass** die Zahnung (53) wenigstens einen Zahn (54) und die Zahnungsaufnahme wenigstens eine an den Zahn (54) formangepasste Zahnaufnahme (56) aufweist.

3. Befestigungssystem nach einem der vorhergehenden Ansprüche, **dadurch gekennzeichnet, dass** sich die Zahnung (53) und/oder die Zahnungsaufnahme (35) über die gesamte Breite (B,b) oder lediglich einen Teil der Breite (B,b) des Einsteckvorsprungs (11) oder der Einsteckaufnahme (12) erstrecken.

4. Befestigungssystem nach einem der vorhergehenden Ansprüche, **dadurch gekennzeichnet, dass** die Zahnung (53) und/oder die Zahnungsaufnahme (35) mehrere Zähne (54) oder Zahnaufnahmen (35) aufweisen, die voneinander beabstandet, insbesondere quer zu einer Einschubrichtung des Einsteckvorsprungs (11) beabstandet, angeordnet sind.

5. Befestigungssystem nach einem der vorhergehenden Ansprüche, **dadurch gekennzeichnet, dass** das Halteelement (10) als Winkelelement (29) mit zwei Schenkeln (30,31) vorliegt, wobei einer der Schenkel (30) an dem Solarmodul (2,3) befestigbar ist und der andere der Schenkel (31) den Einsteckvorsprung (11) ausbildet.

6. Befestigungssystem nach einem der vorhergehenden Ansprüche, **dadurch gekennzeichnet, dass** die Einsteckaufnahme (12) auf ihrer dem Solarmodul (2,3) zugewandten Seite eine Einstecköffnung (55) aufweist und sich ausgehend von dieser zumindest abschnittsweise zur Ausbildung einer Einsteckführung (56) für den Einsteckvorsprung (11) verjüngt.

7. Befestigungssystem nach einem der vorhergehenden Ansprüche, **dadurch gekennzeichnet, dass** eine Solarmodulauflagefläche (13) für ein weiteres Solarmodul (2,3) an einem Schenkel (42) eines dreischenkligen, insbesondere U-förmigen Befestigungsprofils (40) des Befestigungselements (8,9) vorliegt und die Einsteckaufnahme (12) in die der Solarmodulauflagefläche (13) zugewandte Richtung von einem zweiten Schenkel (43) des Befestigungsprofils (40) begrenzt ist, wobei die beiden Schenkel (42,43) von einem dritten Schenkel (44) des Befestigungsprofils (40) miteinander verbunden sind.

8. Befestigungssystem nach einem der vorhergehenden Ansprüche, **dadurch gekennzeichnet, dass** die Zahnung (53) oder die Zahnaufnahme (35) an dem zweiten Schenkel (43) ausgebildet ist.

9. Befestigungssystem nach einem der vorhergehenden Ansprüche, **dadurch gekennzeichnet, dass** der zweite Schenkel (43) des Befestigungsprofils (40) einen Mittelschenkel (45) eines die Einsteckaufnahme (12) zumindest teilweise begrenzenden dreischenkligen Aufnahmeprofils (41) bildet, dessen von dem Mittelschenkel (45) ausgehende Seitenschenkel (46,47) sich in die der Solarmodulauflagefläche (13) abgewandte Richtung erstrecken.

10. Befestigungssystem nach einem der vorhergehenden Ansprüche, **dadurch gekennzeichnet, dass** von den Seitenschenkeln (46,47) des Aufnahmeprofils (41) auf der dem Mittelschenkel (45) abgewandten Seite jeweils ein im Wesentlichen parallel zu der Solarmodulauflagefläche (13) verlaufendes Montageflächenauflageelement (48,49) ausgeht.

11. Befestigungssystem nach einem der vorhergehenden Ansprüche, **dadurch gekennzeichnet, dass** von dem Montageflächenauflageelement (48,49) wenigstens ein Stützvorsprung (51,52) ausgeht, der ein Montageflächenelement der Montagefläche (4), insbesondere eine Dachlatte (5), bei Anordnung des Befestigungselements (8,9) an oder in der Montagefläche zur Abstützung hintergreift.

12. Befestigungssystem nach einem der vorhergehenden Ansprüche, **dadurch gekennzeichnet, dass** die Einsteckaufnahme (12) in Richtung der Montagefläche (4) offen ist und der Einsteckvorsprung (11) in der Ruheposition auf einer von der Montagefläche (4) gebildeten oder an der Montagefläche (4) vorliegenden Stützfläche aufliegt.

13. Befestigungssystem nach einem der vorhergehenden Ansprüche, **dadurch gekennzeichnet, dass** das Befestigungselement (8) an oder im Bereich der Solarmodulauflagefläche (13) eine Schraubenaufnahme (16) für eine Schraubverbindung (15) mit dem weiteren Solarmodul (2,3) aufweist.

14. Befestigungssystem nach einem der vorhergehenden Ansprüche, **dadurch gekennzeichnet, dass** die Schraubenaufnahme (16) eine mit dem Befestigungselement (8,9) verbundene Schraubenmutter oder ein mit dem Befestigungselement (8,9) verbundenes Aufnahmeelement (18) aus einem durch Anbringen der Schraubverbindung (15) verformbaren Material ist oder vor einen Bereich des Befestigungselements (8,9) gebildet ist.

15. Solarmodulanordnung (1), mit wenigstens einem an oder in einer Montagefläche (4) angeordneten Solarmodul (2,3) und mit einem Befestigungssystem (7), insbesondere nach einem oder mehreren der vorhergehenden Ansprüche, wobei das Befestigungssystem (7) wenigstens ein an oder in der Montagefläche (4) befestigtes Befestigungselement (8,9) und wenigstens ein an dem Solarmodul (2,3) befestigtes Halteelement (10) aufweist, **dadurch gekennzeichnet, dass** das Halteelement (10) mindestens einen Einsteckvorsprung (11) und das Befestigungselement (8,9) mindestens eine Einsteckaufnahme (12) zur Steckaufnahme des Einsteckvorsprungs (11) aufweist, wobei die Einsteckaufnahme (12) eine zwischen einer Aufnahmeunterseite (58) und einer Aufnahmeoberseite (59) bestehende Höhenabmessung (H) aufweist, die größer ist als eine zwischen einer Vorsprungsunterseite (60) und einer Vorsprungsoberseite (61) bestehende Dickenabmessung (h) des Einsteckvorsprungs (11), wobei zur Bildung einer bei einem Anheben des Einsteckvorsprungs (11) wirkenden Herausziehsperre (61) die Einsteckaufnahme (12) im Bereich ihrer Aufnahmeoberseite (59) eine Zahnungsaufnahme oder Zahnung (53) und der Einsteckvorsprung (11) im Bereich seiner Vorsprungsoberseite (61) eine Zahnung oder Zahnungsaufnahme (35) aufweist und das Halteelement (10) zusammen mit dem Solarmodul (2,3), insbesondere durch Windkrafteinfluss, zwischen einer Ruheposition, in die es durch Schwerkrafteinfluss gedrängt ist, und einer Anschlagposition, in der es an einem von dem Befestigungselement (8,9) gebildeten Endanschlag anliegt, verlagerbar ist.

16. Solarmodulanordnung nach Anspruch 15, **dadurch gekennzeichnet, dass** wenigstens eines der Solarmodule (2,3) ein Photovoltaikmodul, ein Solarkollektormodul oder ein Solarkombinationsmodul, bestehend aus wenigstens einem Photovoltaikmodul und wenigstens einem Solarkollektormodul, ist.

## Geänderte Patentansprüche

### Geänderte Patentansprüche gemäss Regel 137(2) EPÜ.

**1.** Befestigungssystem (7) zur Befestigung wenigstens eines an oder in einer Montagefläche (4) anzuordnenden Solarmoduls (2,3) einer Solarmodulanordnung (1), mit mindestens einem an oder in der Montagefläche (4) befestigbaren Befestigungselement (8,9) und mindestens einem an dem Solarmodul (2,3) befestigbaren Halteelement (10), wobei das Halteelement (10) mindestens einen Einsteckvorsprung (11) und das Befestigungselement (8,9) mindestens eine Einsteckaufnahme (12) zur Steckaufnahme des Einsteckvorsprungs (11) aufweist, und zur Bildung einer bei einem durch Windkrafteinfluss erfolgenden Anheben des Einsteckvorsprungs (11) wirkenden Herausziehsperre (62) die Einsteckaufnahme (12) im Bereich ihrer Aufnahmeoberseite (59) eine Zahnungsaufnahme oder Zahnung (53) und der Einsteckvorsprung (11) im Bereich seiner Vorsprungsoberseite (61) eine Zahnung oder Zahnungsaufnahme (35) aufweist, und das Halteelement (10) zusammen mit dem daran anzuordnenden Solarmodul (2,3) durch den Windkrafteinfluss zwischen einer Ruheposition, in die es durch Schwerkrafteinfluss gedrängt ist, und einer durch das Anheben bewirkten Anschlagposition, in der es an einem von dem Befestigungselement (8) gebildeten Endanschlag anliegt, verlagerbar ist, wobei die Einsteckaufnahme (12) eine zwischen einer Aufnahmeunterseite (58) und der Aufnahmeoberseite (59) bestehende Höhenabmessung (H) aufweist, die derart größer ist als eine zwischen einer Vorsprungsunterseite (60) und der Vorsprungsoberseite (61) bestehende Dickenabmessung (h) des Einsteckvorsprungs (11), dass die Zahnung beziehungsweise Zahnungsaufnahme des Einsteckvorsprungs (11) in der Ruheposition nicht mit der Zahnungsaufnahme beziehungsweise Zahnung der Einsteckaufnahme (12) zusammenwirkt und wobei das Zusammenwirken dann auftritt, wenn das Halteelement (10) ausreichend weit angehoben ist, insbesondere die Anschlagposition vorliegt.

**2.** Befestigungssystem nach Anspruch 1, **dadurch gekennzeichnet, dass** die Zahnung (53) wenigstens einen Zahn (54) und die Zahnungsaufnahme wenigstens eine an den Zahn (54) formangepasste Zahnaufnahme (56) aufweist.

**3.** Befestigungssystem nach einem der vorhergehenden Ansprüche, **dadurch gekennzeichnet, dass** sich die Zahnung (53) und/oder die Zahnungsaufnahme (35) über die gesamte Breite (B,b) oder lediglich einen Teil der Breite (B,b) des Einsteckvorsprungs (11) oder der Einsteckaufnahme (12) erstrecken.

**4.** Befestigungssystem nach einem der vorhergehenden Ansprüche, **dadurch gekennzeichnet, dass** die Zahnung (53) und/oder die Zahnungsaufnahme (35) mehrere Zähne (54) oder Zahnaufnahmen (35) aufweisen, die voneinander beabstandet, insbesondere quer zu einer Einschubrichtung des Einsteckvorsprungs (11) beabstandet, angeordnet sind.

**5.** Befestigungssystem nach einem der vorhergehenden Ansprüche, **dadurch gekennzeichnet, dass** das Halteelement (10) als Winkelelement (29) mit zwei Schenkeln (30,31) vorliegt, wobei einer der Schenkel (30) an dem Solarmodul (2,3) befestigbar ist und der andere der Schenkel (31) den Einsteckvorsprung (11) ausbildet.

**6.** Befestigungssystem nach einem der vorhergehenden Ansprüche, **dadurch gekennzeichnet, dass** die Einsteckaufnahme (12) auf ihrer dem Solarmodul (2,3) zugewandten Seite eine Einstecköffnung (55) aufweist und sich ausgehend von dieser zumindest abschnittsweise zur Ausbildung einer Einsteckführung (56) für den Einsteckvorsprung (11) verjüngt.

**7.** Befestigungssystem nach einem der vorhergehenden Ansprüche, **dadurch gekennzeichnet, dass** eine Solarmodulauflagefläche (13) für ein weiteres Solarmodul (2,3) an einem Schenkel (42) eines dreischenkligen, insbesondere U-förmigen Befestigungsprofils (40) des Befestigungselements (8,9) vorliegt und die Einsteckaufnahme (12) in die der Solarmodulauflagefläche (13) zugewandte Richtung von einem zweiten Schenkel (43) des Befestigungsprofils (40) begrenzt ist, wobei die beiden Schenkel (42,43) von einem dritten Schenkel (44) des Befestigungsprofils (40) miteinander verbunden sind.

**8.** Befestigungssystem nach einem der vorhergehenden Ansprüche, **dadurch gekennzeichnet, dass** die Zahnung (53) oder die Zahnaufnahme (35) an dem zweiten Schenkel (43) ausgebildet ist.

**9.** Befestigungssystem nach einem der vorhergehenden Ansprüche, **dadurch gekennzeichnet, dass** der zweite Schenkel (43) des Befestigungsprofils (40) einen Mittelschenkel (45) eines die Einsteckaufnahme (12) zumindest teilweise begrenzenden dreischenkligen Aufnahmeprofils (41) bildet, dessen von dem Mittelschenkel (45) ausgehende Seitenschenkel (46,47) sich in die der Solarmodulauflagefläche (13) abgewandte Richtung erstrecken.

**10.** Befestigungssystem nach einem der vorhergehenden Ansprüche, **dadurch gekennzeichnet, dass** von den Seitenschenkeln (46,47) des Aufnahmeprofils (41) auf der dem Mittelschenkel (45) abgewandten Seite jeweils ein im Wesentlichen parallel zu der Solarmodulauflagefläche (13) verlaufendes Montageflächenauflageelement (48,49) ausgeht.

**11.** Befestigungssystem nach einem der vorhergehenden Ansprüche, **dadurch gekennzeichnet, dass** von dem Montageflächenauflageelement (48,49) wenigstens ein Stützvorsprung (51,52) ausgeht, der ein Montageflächenelement der Montagefläche (4), insbesondere eine Dachlatte (5), bei Anordnung des Befestigungselements (8,9) an oder in der Montagefläche zur Abstützung hintergreift.

**12.** Befestigungssystem nach einem der vorhergehenden Ansprüche, **dadurch gekennzeichnet, dass** die Einsteckaufnahme (12) in Richtung der Montagefläche (4) offen ist und der Einsteckvorsprung (11) in der Ruheposition auf einer von der Montagefläche (4) gebildeten oder an der Montagefläche (4) vorliegenden Stützfläche aufliegt.

**13.** Befestigungssystem nach einem der vorhergehenden Ansprüche, **dadurch gekennzeichnet, dass** das Befestigungselement (8) an oder im Bereich der Solarmodulauflagefläche (13) eine Schraubenaufnahme (16) für eine Schraubverbindung (15) mit dem weiteren Solarmodul (2,3) aufweist.

**14.** Befestigungssystem nach einem der vorhergehenden Ansprüche, **dadurch gekennzeichnet, dass** die Schraubenaufnahme (16) eine mit dem Befestigungselement (8,9) verbundene Schraubenmutter oder ein mit dem Befestigungselement (8,9) verbundenes Aufnahmeelement (18) aus einem durch Anbringen der Schraubverbindung (15) verformbaren Material ist oder vor einen Bereich des Befestigungselements (8,9) gebildet ist.

**15.** Solarmodulanordnung (1), mit wenigstens einem mittels eines Befestigungssystems (7) an oder in einer Montagefläche (4) angeordneten Solarmodul (2,3), wobei das Befestigungssystem (7) wenigstens ein an oder in der Montagefläche (4) befestigtes Befestigungselement (8,9) und wenigstens ein an dem Solarmodul (2,3) befestigtes Halteelement (10) aufweist, das Halteelement (10) mindestens einen Einsteckvorsprung (11) und das Befestigungselement (8,9) mindestens eine Einsteckaufnahme (12) zur Steckaufnahme des Einsteckvorsprungs (11) aufweist, und zur Bildung einer bei einem durch Windkrafteinfluss erfolgenden Anheben des Einsteckvorsprungs (11) wirkenden Herausziehsperre (62) die Einsteckaufnahme (12) im Bereich ihrer Aufnahmeoberseite (59) eine Zahnungsaufnahme oder Zahnung (53) und der Einsteckvorsprung (11) im Bereich seiner Vorsprungsoberseite (61) eine Zahnung oder Zahnungsaufnahme (35) aufweist und das Halteelement (10) zusammen mit dem daran angeordneten Solarmodul (2,3) durch den Windkrafteinfluss zwischen einer Ruheposition, in die es durch Schwerkrafteinfluss gedrängt ist, und einer durch das Anheben bewirkten Anschlagposition, in der es an einem von dem Befestigungselement (8,9) gebildeten Endanschlag anliegt, verlagerbar ist, wobei die Einsteckaufnahme (12) eine zwischen einer Aufnahmeunterseite (58) und der Aufnahmeoberseite (59) bestehende Höhenabmessung (H) aufweist, die derart größer ist als eine zwischen einer Vorsprungsunterseite (60) und der Vorsprungsoberseite (61) bestehende Dickenabmessung (h) des Einsteckvorsprungs (11), dass die Zahnung beziehungsweise Zahnungsaufnahme des Einsteckvorsprungs (11) in der Ruheposition nicht mit der Zahnungsaufnahme beziehungsweise Zahnung der Einsteckaufnahme (12) zusammenwirkt und wobei das Zusammenwirken dann auftritt, wenn das Halteelement (10) ausreichend weit angehoben ist, insbesondere die Anschlagposition vorliegt.

**16.** Solarmodulanordnung nach Anspruch 15, **dadurch gekennzeichnet, dass** wenigstens eines der Solarmodule (2,3) ein Photovoltaikmodul, ein Solarkollektormodul oder ein Solarkombinationsmodul, bestehend aus wenigstens einem Photovoltaikmodul und wenigstens einem Solarkollektormodul, ist.
